# EUROPEAN PATENT APPLICATION

(11) **EP 4 834 959 A1**
(43) Date of publication of application: **04.11.2026**
(21) Application number: 24913050.1
(22) Date of filing: 26.12.2024
(51) Int. Cl.: C08F 214/18

(54) **METHOD FOR PRODUCING SOLID COMPOSITION, SOLID COMPOSITION, AND CROSSLINKED RUBBER ARTICLE**

(30) Priority: 28.12.2023 JP 2023222139
(71) Applicant: AGC Inc., Chiyoda-ku Tokyo 100-8405 (JP)
(72) Inventor: YANAGIYA Aoi, Tokyo 100-8405 (JP); TAMURA Tasuku, Tokyo 100-8405 (JP); KAWAI Tsuyoshi, Tokyo 100-8405 (JP); TAGUCHI Daisuke, Tokyo 100-8405 (JP); TOYODA Mizuna, Tokyo 100-8405 (JP); YONEDA Toshikazu, Tokyo 100-8405 (JP)
(74) Representative: Müller-Boré & Partner Patentanwälte PartG mbB
(86) International application number: PCT/JP2024/046265
(87) International publication number: WO 2025/143164

(57) **Abstract**

To provide a method for producing a solid composition, by which it is possible to produce a solid composition that contains substantially no emulsifier and that is excellent in crosslinking rate. A method for producing a solid composition, which comprises polymerizing; in an aqueous dispersion that contains substantially no water-soluble emulsifier, that contains a first fluorinated polymer containing TFE units and PAVE units, and that contains an aqueous medium; monomers containing TFE and PAVE, subjecting the aqueous dispersion containing a second fluorinated polymer obtained to a stirring treatment, and recovering solid obtained after the stirring treatment to obtain a solid composition, wherein in the first fluorinated polymer, to the total content of the TFE units and the PAVE units, the content of the PAVE units is 5 to 80 mol%; in the second fluorinated polymer, to the total content of TFE units and PAVE units, the content of the PAVE units is 15 to 95 mol%; and before the start of the polymerization of the monomers, the content of the first fluorinated polymer is 0.01 to 4.0 mass% to the total mass of the aqueous dispersion.

## Description

### TECHNICAL FIELD

The present invention relates to a method for producing a solid composition, a solid composition, and a crosslinked rubber article.

### BACKGROUND ART

Crosslinked rubber articles, obtained by crosslinking a composition containing a fluorinated polymer, which are excellent in heat resistance, chemical resistance, flame retardancy, weather resistance, etc., are used in various industrial fields.

As a method for producing such a fluorinated polymer, a method of emulsion-polymerizing a fluorinated monomer in an aqueous medium using an emulsifier has been known (Patent Document 1).

### PRIOR ART DOCUMENTS

### PATENT DOCUMENTS

Patent Document 1: WO2022/052498

### DISCLOSURE OF INVENTION

### TECHNICAL PROBLEM

By the method for producing a fluorinated polymer as disclosed in Patent Document 1, an emulsifier is used at the time of polymerization, however, in recent years, reduction of the emulsifier has been required since if the emulsifier remains in a crosslinked rubber article produced by using a composition containing the fluorinated polymer, it may have adverse effects such as environmental contamination.

Further, in production of crosslinked rubber articles and the like, in view of production efficiency, a high crosslinking rate is required.

That is, in recent years, a fluorinated solid composition containing substantially no emulsifier and being excellent in crosslinking rate has been required.

Under these circumstances, the present invention has been made to solve the above problems, and the object of the present invention is to provide a method for producing a solid composition by which a solid composition containing substantially no emulsifier and being excellent in crosslinking rate can be produced. Another object of the present invention is to provide such a solid composition.

### SOLUTION TO PROBLEM

The present inventors have conducted extensive studies on the above objects and as a result found that a solid composition can be obtained without using an emulsifier and a component that decreases the crosslinking rate, by a method of polymerizing monomers in an aqueous dispersion that contains substantially no emulsifier and that contains a predetermined first fluorinated polymer and conducting a stirring treatment to recover a solid composition, and accomplished the present invention.

That is, the present inventors have found that the above objects can be achieved by the following configurations.
[1] A method for producing a solid composition, which comprises polymerizing; in an aqueous dispersion that contains substantially no water-soluble emulsifier, that contains a first fluorinated polymer containing units based on tetrafluoroethylene and units based on a perfluoro(alkyl vinyl ether), and that contains an aqueous medium; monomers containing tetrafluoroethylene and a perfluoro(alkyl vinyl ether), subjecting the aqueous dispersion containing a second fluorinated polymer obtained to a stirring treatment, and recovering solid obtained after the stirring treatment to obtain a solid composition, wherein
   in the first fluorinated polymer, to the total content of the units based on the tetrafluoroethylene and the units based on the perfluoro(alkyl vinyl ether), the content of the units based on the perfluoro(alkyl vinyl ether) is 5 to 80 mol%;
   in the second fluorinated polymer, to the total content of units based on the tetrafluoroethylene and units based on the perfluoro(alkyl vinyl ether), the content of the units based on the perfluoro(alkyl vinyl ether) is 15 to 95 mol%; and
   before the start of the polymerization of the monomers, the content of the first fluorinated polymer is 0.01 to 4.0 mass% to the total mass of the aqueous dispersion.
[2] The method for producing the solid composition according to [1], wherein the storage elastic modulus of the solid composition at 100°C is 300 kPa or more.
[3] The method for producing the solid composition according to [1] or [2], wherein the solid composition contains no emulsifier, or if the solid composition contains an emulsifier, the total content of the emulsifier is 500 ppb or less to the total mass of the solid composition.
[4] The method for producing the solid composition according to any one of [1] to [3], wherein the total content of metals in the solid composition is 20 mass ppm or less to the total mass of the solid composition.
[5] The method for producing the solid composition according to any one of [1] to [4], wherein in the second fluorinated polymer, the content of the units based on the tetrafluoroethylene is 35 to 80 mol% and the content of the units based on the perfluoro(alkyl vinyl ether) is 20 to 60 mol%, to all units.
[6] The method for producing the solid composition according to any one of [1] to [5], wherein the second fluorinated polymer contains at least one member selected from the group consisting of a polymerizable unsaturated bond, a chlorine atom, a bromine atom, an iodine atom and a nitrile group.
[7] The method for producing the solid composition according to any one of [1] to [6], which has a step of washing the solid composition.
[8] A solid composition comprising a fluorinated polymer having units based on tetrafluoroethylene and units based on a perfluoro(alkyl vinyl ether);
   which contains substantially no emulsifier; and
   which satisfies requirement X;
   requirement X: a mixture obtained by mixing the solid composition and water having a pH of 6 so that the mass of the water is 5 times the mass of the solid composition, 24 hours after the mixing, has a pH of 4 or higher at 23°C.
[9] The solid composition according to [8], which contains substantially no agglomerating agent.
[10] A crosslinked rubber article, which is obtained by crosslinking the solid composition as defined in [8] or [9].

### ADVANTAGEOUS EFFECTS OF INVENTION

According to the present invention, it is possible to provide a method for producing a solid composition by which a solid composition containing substantially no emulsifier and being excellent in the crosslinking rate can be produced. According to the present invention, it is also possible to provide the solid composition and a crosslinked rubber article obtained by crosslinking the solid composition.

### DESCRIPTION OF EMBODIMENTS

Meanings of terms used in this specification are as follows.

In this specification, " to " used to show a range of numerical values is used to include numerical values before and after it as the lower limit value and the upper limit value.

In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

"Units" generically mean an atomic group derived from one molecule of a monomer, directly formed by polymerization of the monomer, and an atomic group obtained by chemical conversion of a part of the atomic group. "Units based on a monomer" may sometimes be referred to simply as "units".

The content (mass% or mol%) of each units to all units of a polymer is obtained by analyzing the polymer by solid-state nuclear magnetic resonance spectroscopy (NMR). Usually, the content of each units calculated from the amount of charge of each monomer substantially agrees with the actual content of each units.

### [Method for producing solid composition]

The method for producing a solid composition of the present invention (hereinafter also referred to as "the present production method") is a method for producing a solid composition, which comprises polymerizing, in an aqueous dispersion that contains substantially no water-soluble emulsifier, that contains a first fluorinated polymer containing units based on tetrafluoroethylene (hereinafter also referred to as "TFE") and units based on a perfluoro(alkyl vinyl ether) (hereinafter also referred to as "PAVE"), and that contains an aqueous medium (hereinafter this aqueous dispersion will also be referred to as "first aqueous dispersion"), monomers containing TFE and PAVE, subjecting the aqueous dispersion containing a second fluorinated polymer obtained (hereinafter also referred to as "second aqueous dispersion) to a stirring treatment, and recovering solid obtained after the stirring treatment to obtain a solid composition, wherein
in the first fluorinated polymer, to the total content of the units based on TFE and the units based on PAVE , the content of the units based on PAVE is 5 to 80 mol%;
in the second fluorinated polymer, to the total content of units based on TFE and units based on PAVE, the content of the units based on PAVE is 15 to 95 mol%; and
before the start of the polymerization of the monomers, the content of the first fluorinated polymer is 0.01 to 4.0 mass% to the total mass of the aqueous dispersion.

According to the present production method, it is possible to produce a solid composition containing substantially no emulsifier and being excellent in the crosslinking rate. The mechanism has not been understood in detail yet, but is estimated as follows. That is, by polymerization in the first aqueous dispersion containing a predetermined amount of the predetermined first fluorinated polymer, the first fluorinated polymer functions as a polymerization site, whereby the monomers can be polymerized without using an emulsifier, and a solid composition containing substantially no emulsifier is obtained. In a case where an emulsifier is used at the time of polymerization, usually an agglomerating agent such as an acid is required when solid is recovered from an aqueous dispersion after the polymerization, and such an agglomerating agent if remains in the solid composition impairs the crosslinking reaction and decreases the crosslinking rate. According to the present production method, as described above, polymerization is conducted in the first aqueous dispersion that contains substantially no emulsifier, and therefore a solid composition is obtained by a stirring treatment. The solid composition thus obtained, containing no component which may impair crosslinking, is also excellent in the crosslinking rate.

In this specification, the step of polymerizing the monomers containing TFE and PAVE in the first aqueous dispersion to obtain the second aqueous dispersion containing the second fluorinated polymer will also be referred to as "step 1", and the step of subjecting the second aqueous dispersion to a stirring treatment and recovering solid to obtain the solid composition will also be referred to as "step 2". The monomers containing TFE and PAVE used in the step of obtaining the second aqueous dispersion containing the second fluorinated polymer will also be referred to as "specific monomers".

Now, the respective steps will be described below.

### <Step 1>

In step 1 of the present production method, polymerization is conducted in the first aqueous dispersion that contains substantially no water-soluble emulsifier, that contains the first fluorinated polymer and an aqueous medium.

### (First aqueous dispersion)

### · Emulsifier

The first aqueous dispersion does not employ a water-soluble emulsifier and contains substantially no water-soluble emulsifier.

"Contains substantially no water-soluble emulsifier" means a content of the water-soluble emulsifier in the first aqueous dispersion, to the total mass of the first aqueous dispersion, of 10 mass ppm or less, preferably 100 mass ppb or less, more preferably 50 mass ppb or less. The content is also preferably the quantitative determination limit or less in the measurement method described in EXAMPLES. The lower limit may be 1 mass ppb.

The content of the water-soluble emulsifier may be measured by a liquid chromatography mass spectrometer. Specifically, the measurement method described in WO2018/181904, paragraphs [0721] to [0732] may be mentioned, and the measurement method described in EXAMPLES is preferred.

The water-soluble emulsifier refers to an emulsifier having a solubility in 1000 g of water at 25°C of 100 mg or more.

The water-soluble emulsifier may be an emulsifier having a fluorine atom or an emulsifier having no fluorine atom, which is water-soluble. Neither of the first fluorinated polymer nor the second fluorinated polymer to be described below corresponds to an emulsifier.

The water-soluble emulsifier may be either ionic or non-ionic.

The emulsifier having a fluorine atom may be an anionic fluorinated emulsifier.

The anionic fluorinated emulsifier may be an emulsifier of which the moiety excluding the anionic group has a total number of carbon atoms of 20 or less and which has a fluorine atom, or an emulsifier of which the anionic moiety has a molecular weight of 800 or less and which has a fluorine atom.

The emulsifier having no fluorine atom has no fluorine atom and has a hydrocarbon group such as an alkyl group. The hydrogen atom in the hydrocarbon group of the emulsifier having no fluorine atom, may be replaced with a halogen atom other than a fluorine atom.

The emulsifier having no fluorine atom may be an ionic hydrocarbon emulsifier or a non-ionic hydrocarbon emulsifier.

The ionic hydrocarbon emulsifier may be an anionic hydrocarbon emulsifier.

The anionic hydrocarbon emulsifier refers to a hydrocarbon emulsifier having a negatively charged hydrophilic moiety such as a carboxylate group, a sulfonate group, a sulfate group, a phosphonate group or a phosphate group, and having a hydrocarbon moiety such as an alkyl group as the hydrophobic moiety.

Examples of the anionic hydrocarbon emulsifier include a highly branched C10 tertiary carboxylic acid available as Versatic (registered trademark) 10 from Resolution Performance Products, sodium linear alkyl polyether sulfonate available as Avanel (registered trademark) S series from BASF, sodium dodecyl sulfate, and sulfosuccinate emulsifier Lankropol (registered trademark) K8300 available from AkzoNobel Surface Chemistry LLC.

The non-ionic hydrocarbon emulsifier is am emulsifier which does not dissociate into ions in water and show surface activity, and has a hydrocarbon group such as an alkyl group as the hydrophobic moiety.

The hydrophilic moiety of the non-ionic hydrocarbon emulsifier may be a water-soluble functional group such as a polyethylene oxide chain, obtained by polymerization of ethylene oxide. The non-ionic hydrocarbon emulsifier may be a polyalkylene oxide block copolymer, for example, a block copolymer having polyethylene oxide and polypropylene oxide.

As the non-ionic hydrocarbon emulsifier, emulsifiers as described in JP-A-2016-537499 at paragraphs [0043] to [0052] may be mentioned.

The emulsifier having a fluorine atom and the emulsifier having no fluorine atom may contain a silicon atom. The emulsifier containing a silicon atom may be a siloxane emulsifier.

The siloxane emulsifier may be emulsifiers as described in US Patent No. 6,841,616 (Wille et al) and US Patent No. 7,977,438 (Brothers et al).

The emulsifier having a fluorine atom and the emulsifier having no fluorine atom may be a polymer emulsifier. The polymer emulsifier may be a water-soluble polymer having a hydrophilic group at its side chain. Such a polymer emulsifier may, for example, be a polymer having units based on a compound having a polymerizable moiety and a hydrophilic group. Further, a polymer which had no hydrophilic group at the time of polymerization but had units based on a compound having a group convertible to a hydrophilic group, having been subjected to post-treatment such as hydrolysis, may also be mentioned.

The first aqueous dispersion preferably contains substantially none of emulsifiers represented by the formulae (S1) to (S4). When no emulsifier is used at the time of production of the first fluorinated polymer contained in the first aqueous dispersion, generation of the compounds represented by the formulae (S1) to (S4) can be suppressed, and the contents of these compounds can readily be adjusted.

H-(CF₂)ₙ₁-COOM (S1)

F-(CF₂)ₙ₁-COOM (S2)

H-(CF₂)ₙ₂-SO₃M (S3)

F-(CF₂)ₙ₂-SO₃M (S4)

In the formulae (S1) to (S4),
n1 is an integer of 3 to 19,
n2 is an integer of 4 to 20, and
M is each independently a hydrogen atom, Na, K or NH₄.

### · First fluorinated polymer

The first fluorinated polymer contains units based on TFE and units based on PAVE.

It is estimated to be as follows. That is, the first fluorinated polymer, at the time of polymerization of the specific monomers to be described below, adsorbs and includes the specific monomers at its hydrophobic moiety to solubilize the specific monomers even when the first aqueous dispersion contains no emulsifier, and facilitate the polymerization of the specific monomers. Further, the first fluorinated polymer contributes to dispersion stabilization in the first aqueous dispersion.

PAVE is preferably a monomer represented by the formula (1), in view of excellent polymerizability when the first fluorinated polymer is produced, and with a view to more efficiently producing the second fluorinated polymer.

CF₂=CF-O-R^{f1} (1)

In the formula (1), R^{f1} is a C₁₋₁₀ perfluoroalkyl group. The number of carbon atoms in R^{f1} is, in view of more excellent polymerizability, preferably 1 to 8, more preferably 1 to 6, further preferably 1 to 5, particularly preferably 1 to 3.

The perfluoroalkyl group may be linear or branched.

Specific examples of PAVE include perfluoro(methyl vinyl ether) (hereinafter also referred to as "PMVE"), perfluoro(ethyl vinyl ether) and perfluoro(propyl vinyl ether) (hereinafter also referred to as "PPVE"). With a view to more efficiently producing the second fluorinated polymer, PMVE and PPVE are preferred, and PMVE is more preferred.

In the first fluorinated polymer, the content of the units based on TFE (hereinafter also referred to as "TFE units") to the total content of the TFE units and the units based on PAVE (hereinafter also referred to as "PAVE units") is 20 to 95 mol%, preferably 40 to 85 mol%, and with a view to more efficiently producing the second fluorinated polymer, more preferably 50 to 75 mol%, further preferably 60 to 70 mol%.

In the first fluorinated polymer, the content of the PAVE units to the total content of the TFE units and the PAVE units is 5 to 80 mol%, preferably 15 to 60 mol%, and with a view to more efficiently producing the second fluorinated polymer, more preferably 25 to 55 mol%, further preferably 30 to 40 mol%. The preferred amount is the same also in a case where the PMVE units of the PPVE units are used as the PAVE units.

In the first fluorinated polymer, the total content of the TFE units and the PAVE units to all units of the first fluorinated polymer is preferably 99.0 to 100.0 mol%, more preferably 99.5 to 100.0 mol%, further preferably 99.9 to 100.0 mol%.

The first fluorinated polymer may contain units based on a monomer other than TFE and PAVE, and with a view to more efficiently producing the second fluorinated polymer, it also preferably contains substantially no units based on other monomer.

"Contains substantially no units based on other monomer" means a content of the units based on the other monomer, to all units of the first fluorinated polymer, of 0.01 mol% or less, preferably 0 mol%.

Before the start of the polymerization of the specific monomers, the content of the first fluorinated polymer to the total mass of the first aqueous dispersion is 0.01 to 4.0 mass%, and with a view to more efficiently producing the second fluorinated polymer, preferably 0.01 to 1.0 mass%, more preferably 0.01 to 0.8 mass%.

In this specification, "before the start of the polymerization of the specific monomers" means immediately before the polymerization start point. The "polymerization start point" means a point when the specific monomers (the specific monomers and a polymerization initiator if used) are allowed to coexist in a reactor after the interior of the reactor is heated to the polymerization temperature or higher, a point when the interior of the reactor is heated to the polymerization temperature or higher after the specific monomers (the specific monomers and a polymerization initiator if used) are allowed to coexist in the reactor, or the like.

The content (solid concentration) of the first fluorinated polymer in the first aqueous dispersion may be measured, for example, as follows.

2.0 g of the first aqueous dispersion is heated at 170°C for 20 minutes, the mass of the residue is weighed, and the solid concentration is calculated in accordance with the following formula. 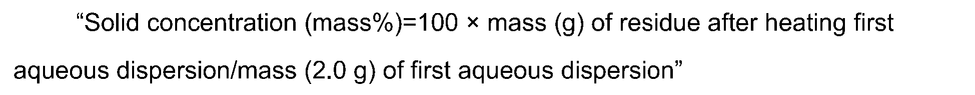 "Solid concentration (mass%)=100 × mass (g) of residue after heating first aqueous dispersion/mass (2.0 g) of first aqueous dispersion"

The method for producing the first fluorinated polymer is preferably a method of polymerizing monomers containing TFE and PAVE in an aqueous medium in the presence of a polymerization initiator. By this method, the first fluorinated polymer dispersed in the form of particles in the aqueous medium is obtained.

The aqueous medium having particles of the first fluorinated polymer dispersed thus obtained may be used as it is as the first aqueous dispersion. Otherwise, by solvent replacement, the first fluorinated polymer may be dispersed in other aqueous medium, and this dispersion may be used as the first aqueous dispersion.

The polymerization initiator used for the production of the first fluorinated polymer is preferably a water-soluble polymerization initiator. Among water-soluble polymerization initiators, a persulfate such as ammonium persulfate, sodium persulfate or potassium persulfate, or an organic polymerization initiator such as disuccinic peroxide or azobisisobutylamidine dihydrochloride, is more preferred, a persulfate is further preferred, and among persulfates, ammonium persulfate is particularly preferred.

The aqueous medium used for production of the first fluorinated polymer may, for example, be water or a solvent mixture of water and a water-soluble organic solvent. Specific examples of the water-soluble organic solvent include tert-butanol, propylene glycol, dipropylene glycol, dipropylene glycol monomethyl ether and tripropylene glycol.

It is preferred that in production of the first fluorinated polymer, substantially no emulsifier is contained. The emulsifier (e.g. the type of the emulsifier, and the definition of "contains substantially no") is as described above.

The first aqueous dispersion containing the first fluorinated polymer is used for the polymerization of the specific monomers, preferably after conducting a purification treatment to reduce or deactivate the polymerization initiator and decomposed products thereof. In the purification treatment, by removing the polymerization initiator and decomposed products thereof which may be contained in the first aqueous dispersion containing the first fluorinated polymer, the solid composition having desired physical property values is likely to be obtained.

The purification treatment method may be heat treatment or removal using an ion exchange resin (preferably an anion exchange resin).

The purification treatment may be conducted several times.

The total exchange capacity of the anion exchange resin is, in view of removal efficiency, preferably 0.1 eq/L resin or more, more preferably 0.3 eq/L resin or more, further preferably 0.5 eq/L resin or more, particularly preferably 0.7 eq/L resin or more. The total exchange capacity of the anion exchange resin may be 20 eq/L resin or less.

The anion exchange resin is preferably spherical. The average particle size of the anion exchange resin is preferably 0.1 to 5 mm, more preferably 0.2 to 2 mm, further preferably 0.3 to 1.5 mm. When the average particle size of the anion exchange resin is within the above range, clogging is less likely to occur during packing of the anion exchange resin. The average particle size of the anion exchange resin is a value measured by screening method. Specifically, first, the anion exchange resin is subjected to a sieve shaker, and the particle size distribution is measured by sieving. The diameter of the screen opening corresponding to 50 mass% of the cumulative retained mass is obtained and is taken as the average particle size.

The anion exchange resin may be of a gel type or a microporous type, and the polymer matrix of the resin may be acrylic-based or styrene-based. The functional group of the anion exchange resin may be strongly basic or weakly basic, and in view of impurity adsorption efficiency, preferably strongly basic. The counter anion of the anion exchange resin may be a chloride ion or a hydroxide ion, and with a view to further reducing the impurity concentration in the aqueous dispersion, preferably a hydroxide ion.

### · Aqueous medium

The aqueous medium contained in the first aqueous dispersion may, for example, be the aqueous medium used for the production of the first fluorinated polymer.

Before the start of the polymerization of the specific monomers, the content of the aqueous medium to the total mass of the first aqueous dispersion is preferably 60 to 99.9 mass%, more preferably 96 to 99.9 mass%, further preferably 98 to 99.9 mass%.

### · Other component

The first aqueous dispersion may contain other component other than the first fluorinated polymer and the aqueous medium.

Specific examples of the other component include a reducing agent, a pH adjusting agent and a chain transfer agent to be described below.

Specific examples of the pH adjusting agent include an inorganic salt and ammonia. Specific examples of the inorganic salt include phosphates such as disodium hydrogenphosphate and sodium dihydrogen phosphate, sodium hydrogen carbonate and carbonates such as sodium carbonate. More preferred specific examples of the phosphate include disodium hydrogenphosphate dihydrate and disodium hydrogenphosphate dodecahydrate.

In a case where the first aqueous dispersion contains the pH adjusting agent, the content of the pH adjusting agent is preferably 0.004 to 3.0 parts by mass per 100 parts by mass of the aqueous medium.

### (Specific monomers)

The specific monomers are monomers containing TFE and PAVE. The preferred embodiments of TFE and PAVE as the specific monomers are the same as the preferred embodiments of TFE and PAVE in the above-described first fluorinated polymer.

The total amount of TFE and PAVE used, to the amount of the specific monomers used, is preferably 80 to 100 mol%, more preferably 90 to 100 mol%, further preferably 95 to 100 mol%.

The specific monomers may contain a monomer other than TFE and PAVE (hereinafter also referred to as "other monomer").

Specific examples of the other monomer include a monomer having two or more polymerizable unsaturated bonds (hereinafter also referred to as "BO"), a monomer having one or more of at least one type of atom selected from the group consisting of a chlorine atom, a bromine atom and an iodine atom (hereinafter also referred to as "R_{Hal}"), a monomer having a nitrile group (hereinafter also referred to as "R_{CN}"), and a compound represented by the formula (6) to be described below (hereinafter also referred to as "POAVE").

BO is a monomer having two or more polymerizable unsaturated bonds.

The polymerizable unsaturated bond may, for example, be a carbon atom-carbon atom double bond (C=C) and a carbon atom-carbon atom triple bond (C≡C).

The number of the polymerizable unsaturated bonds in BO is preferably 2 to 6, more preferably 2 or 3, further preferably 2, in view of more excellent polymerizability.

BO preferably has a fluorine atom, whereby the resulting crosslinked rubber article has a smaller compression set at high temperature.

BO is preferably a monomer represented by the formula (2), whereby the resulting crosslinked rubber article has more excellent mold release property.

(CR²¹R²²=CR²³-)ₐ₁R²⁴ (2)

In the formula (2), R²¹, R²² and R²³ are each independently a hydrogen atom, a fluorine atom, a methyl group or a trifluoromethyl group, a1 is an integer of 2 to 6, R²⁴ is a C₁₋₁₀ a1-valent perfluorohydrocarbon group, or a group having an etheric oxygen atom at a terminal end or in a carbon-carbon bond of a C₁₋₁₀ a1-valent perfluorohydrocarbon group. The plurality of R²¹, the plurality of R²² and the plurality of R²³ may be respectively identical to each other or different from each other, and they are preferably identical to each other.

a1 is preferably 2 or 3, particularly preferably 2.

R²¹, R²² and R²³ are preferably a fluorine atom or a hydrogen atom, whereby BO is more excellent in polymerizability, it is more preferred that all of R²¹, R²² and R²³ are fluorine atoms or all of them are hydrogen atoms, and it is particularly preferred that all of R²¹, R²², R²³ are fluorine atoms, whereby the resulting crosslinked rubber article is more excellent in mold release property.

R²⁴ may be linear, branched or cyclic, preferably linear or branched, particularly preferably linear. The number of carbon atoms of R²⁴ is preferably 2 to 8, more preferably 3 to 7, further preferably 3 to 6, particularly preferably 3 to 5.

R²⁴ may or may not have an etheric oxygen atom, but it preferably has an etheric oxygen atom, whereby more excellent crosslinking property and rubber physical properties are achieved.

The number of the etheric oxygen atom in R²⁴ is preferably 1 to 6, more preferably 1 to 3, particularly preferably 1 or 2. The etheric oxygen atom in R²⁴ is present preferably at a terminal end of R²⁴.

Specific examples of a preferred monomer among the monomers represented by the formula (2) include a monomer represented by the formula (3) and a monomer represented by the formula (4).

(CF₂=CF-)₂R³¹ (3)

In the formula (3), R³¹ is a C₁₋₁₀ bivalent perfluorohydrocarbon group or a group having an etheric oxygen atom at a terminal end or in a carbon-carbon bond of a C₁₋₁₀ bivalent perfluorohydrocarbon group.

(CH₂=CH-)₂R⁴¹ (4)

In the formula (4), R⁴¹ is a C₁₋₁₀ bivalent perfluorohydrocarbon group, or a group having an etheric oxygen atom at a terminal end or in a carbon-carbon bond of a C₁₋₁₀ bivalent perfluorohydrocarbon group.

Specific examples of the monomer represented by the formula (3) include CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₆OCF=CF₂, CF₂=CFO(CF₂)₈OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂, and CF₂=CFOCF₂CF₂O(CF₂O)₂CF₂CF₂OCF=CF₂.

Specific examples of a more preferred monomer among the monomers represented by the formula (3), include CF₂=CFO(CF₂)₃OCF=CF₂ (hereinafter also referred to as "C3DVE"), and CF₂=CFO(CF₂)₄OCF=CF₂ (hereinafter also referred to as "C4DVE").

Specific examples of the monomer represented by the formula (4) include CH₂=CH(CF₂)₂CH=CH₂, CH₂=CH(CF₂)₄CH=CH₂ and CH₂=CH(CF₂)₆CH=CH₂.

Specific examples of a more preferred monomer among the monomers represented by the formula (4) include CH₂=CH(CF₂)₆CH=CH₂ (hereinafter also referred to as "C6DV").

Particularly, BO is preferably C3DVE or C4DVE.

Specific examples of more preferred monomers R_{Hal} include a monomer having a bromine atom and a monomer having an iodine atom.

Specific examples of the monomer having a bromine atom include CF₂=CFOCF₂CF₂CF₂OCF₂CF₂Br, bromotrifluoroethylene, 4-bromo-3,3,4,4-tetrafluorobutene-1 (BTFB), vinyl bromide, 1-bromo-2,2-difluoroethylene, perfluoroallyl bromide, 4-bromo-1,1,2-trifluorobutene-1, 4-bromo-1,1,3,3,4,4-hexafluorobutene, 4-bromo-3-chloro-1,1,3,4,4-pentafluorobutene, 6-bromo-5,5,6,6-tetrafluorohexene, 4-bromoperfluorobutene-1, and 3,3-difluoroallyl bromide. Further, fluorinated compounds such as 2-bromo-perfluoroethyl perfluorovinyl ether and CF₂Br-R_{f}-O-CF=CF₂ (wherein R_{f} is a perfluoroalkylene group), for example, fluorovinyl ethers such as CF₂BrCF₂O-CF=CF₂, ROCF=CFBr, and ROCBr=CF₂ (wherein R is a lower alkyl group or a fluoroalkyl group), specifically, CH₃OCF=CFBr and CF₃CH₂OCF=CFBr may be mentioned.

Specific examples of the monomer having an iodine atom include iodized olefins represented by the formula: CHR=CH-Z-CH₂CHR-I (wherein R is -H or -CH₃; Z is a linear or branched C₁₋₁₈ (per)fluoroalkylene group which may contain one or more etheric oxygen atoms in some cases, or a (per)fluoropolyoxyalkylene group disclosed in US Patent No. 5674959). Unsaturated ethers of the formulae: I(CH₂CF₂CF₂)ₙOCF=CF₂ and ICH₂CF₂O[CF(CF₃)CF₂O]ₙCF=CF₂ (in the formulae, n=1 to 3) disclosed in US Patent No. 5717036 may also be mentioned. Further, iodoethylene, 4-iodo-3,3,4,4-tetrafluorobutene-1 (ITFB), 3-chloro-4-iodo-3,4,4-trifluorobutene, 2-iodo-1,1,2,2-tetrafluoro-1-(vinyloxy)ethane, 2-iodo-1-(perfluorovinyloxy)-1,1,-2,2-tetrafluoroethylene, 1,1,2,3,3,3-hexafluoro-2-iodo-1-(perfluorovinyloxy)propane, 2-iodoethylvinyl ether, 3,3,4,5,5,5-hexafluoro-4-iodopentene and iodotrifluoroethylene, disclosed in US Patent No. 4694045 may be mentioned. Further, allyl iodide and 2-iodo-perfluoroethyl perfluorovinyl ether may be mentioned.

R_{CN} preferably has a polymerizable unsaturated bond, more preferably has one polymerizable unsaturated bond in view of polymerizability. Specific examples of the polymerizable unsaturated bond include a carbon atom-carbon atom double bond (C=C) and a carbon atom-carbon atom triple bond (C≡C).

R_{CN} is preferably a monomer represented by the following formula (5) in view of more excellent mold release property and heat resistance of the solid composition.

CR⁵¹R⁵²=CR⁵³-R⁵⁴-CN (5)

In the formula (5), R⁵¹, R⁵² and R⁵³ are each independently a hydrogen atom, a fluorine atom or a methyl group, and R⁵⁴ is a C₁₋₁₀ bivalent perfluorohydrocarbon group or a group having an etheric oxygen atom at a terminal end or in a carbon-carbon bond of a C₁₋₁₀ bivalent perfluorohydrocarbon group.

In view of excellent polymerizability of R_{CN}, it is preferred that R⁵¹, R⁵² and R⁵³ are a fluorine atom or a hydrogen atom, it is more preferred that all of R⁵¹, R⁵² are R⁵³ are fluorine atoms or all of them are hydrogen atoms, and it is particularly preferred that all of R⁵¹, R⁵², R⁵³ are fluorine atoms, whereby the resulting crosslinked rubber article is more excellent in mold release property and heat resistance.

R⁵⁴ may be linear, branched or cyclic, and is preferably linear or branched. The number of carbon atoms of R⁵⁴ is preferably 2 to 8, more preferably 3 to 7, further preferably 3 to 6, particularly preferably 3 to 5.

R⁵⁴ may or may not contain an etheric oxygen atom, and in view of more excellent rubber physical properties, preferably contains an etheric oxygen atom.

The number of etheric oxygen atom in R⁵⁴ is preferably 1 to 3, particularly preferably 1 or 2.

Specific examples of the monomer represented by the formula (5) include CF₂=CFOCF₂CF(CF₃)OCF₂CF₂CN (hereinafter also referred to as "8CNVE"), CF₂=CFO(CF₂)₅CN (hereinafter also referred to as "MV5CN"), CF₂=CFOCF₂CF₂CF₂OCF(CF₃)CN and CF₂=CFO(CF₂)₃CN, and in view of more excellent mold release property and heat resistance of the solid composition, preferred are 8CNVE and MV5CN.

POAVE is a compound represented by the compound (6).

CF₂=CF(OCF₂CF₂)ₙ-(OCF₂)ₘ-OR^{f2} (6)

In the formula (6), R^{f2} is a C₁₋₄ perfluoroalkyl group, n is an integer of 0 to 3, m is an integer of 0 to 4, and n+m is an integer of 1 to 7.

The perfluoroalkyl group as R^{f2} may be linear or branched. The number of carbon atoms of R^{f2} is preferably 1 to 3.

When n is 0, m is preferably 1 or 2. When n is 1, m is preferably an integer of 2 to 4. When n is 2 or 3, m is preferably 0. n is preferably an integer of 1 to 3.

When the number of carbon atoms of Rf2, n and m are within the above ranges, the resulting crosslinked rubber article is excellent in low temperature properties and the productivity of the solid composition will improve.

Specific examples of POAVE are as follows. The description in the parentheses after each formula is an abbreviated name for the compound.

CF₂=CF-OCF₂CF₂-(OCF₂)₄-OCF₃ (C9PEVE),

CF₂=CF-OCF₂CF₂-(OCF₂)₂-OCF₃ (C7PEVE),

CF₂=CF-(OCF₂CF₂)₂-OCF₂CF₃ (EEAVE),

CF₂=CF-(OCF₂CF₂)₃-OCF₂CF₃ (EEEAVE),

CF₂=CF-OCF₂-OCF₃, CF₂=CF-OCF₂-OCF₂-OCF₃

POAVE is preferably C9PEVE, C7PEVE, EEAVE or EEEAVE in view of more excellent low temperature property of the crosslinked rubber article and productivity of the solid composition.

Such compounds may be produced by the method described in WO00/056694 from the corresponding alcohols as raw materials.

The amount of the other monomer used, to the amount of the specific monomers used, is preferably 0 to 20 mol%, more preferably 0 to 10 mol%, further preferably 0 to 5 mol%.

The specific monomers preferably consist solely of TFE and PAVE, or preferably contain TFE and PAVE and further contain at least one monomer selected from the group consisting of BO, R_{Hal} and R_{CN}.

### (Polymerization initiator)

In step 1 of the present production method, the specific monomers are polymerized preferably in the presence of a polymerization initiator.

The polymerization initiator is preferably an oil-soluble radical initiator, a water-soluble radical initiator or a water-soluble redox catalyst.

Specific examples of the oil-soluble radical initiator include oil-soluble organic peroxides such as tert-butyl peroxypivalate and diisopropyl peroxydicarbonate.

Specific examples of the water-soluble radical initiator include persulfates such as ammonium persulfate and potassium persulfate, and water-soluble organic peroxides such as and disuccinic peroxide, bisglutaric peroxide and tert-butyl hydroperoxide.

The water-soluble redox catalyst is preferably a combination of an oxidizing agent such as bromic acid or its salt, chloric acid or its salt, persulfuric acid or its salt, permanganic acid or its salt, or hydrogen peroxide, and a reducing agent such as sulfurous acid or its salt, hydrogensulfite or its salt, thiosulfuric acid or its salt, an organic acid or an inorganic salt. The persulfate is preferably potassium persulfate or ammonium persulfate. The sulfite is preferably sodium sulfite. The inorganic salt may be a combination of sulfate anion, sulfite anion or chloride anion and metal ion. The metal ion is preferably a transition metal ion, such as a manganese, iron, cobalt, nickel, copper, zinc, cerium or silver ion, and is preferably an iron ion. The inorganic salt is preferably iron(II) sulfate.

The polymerization initiator is preferably the oil-soluble radical initiator or the water-soluble radical initiator, and with a view to more efficiently producing the fluorinated polymer, more preferably the water-soluble radical initiator, further preferably a persulfate or a water-soluble organic peroxide.

The polymerization initiator may be used in combination of two or more types.

The amount of the initiator used is, per 100 parts by mass of the specific monomers used, preferably 0.01 to 5 parts by mass, more preferably 0.01 to 3 parts by mass, further preferably 0.01 to 2 parts by mass.

### (Chain transfer agent)

In step 1 of the present production method, the specific monomers are also preferably polymerized in the presence of a chain transfer agent.

Specific examples of the chain transfer agent include a chain transfer agent having an iodine atom, ethyl acetate, methanol, ethanol, t-butyl methyl ether, diethyl ether, n-pentane, cyclohexane, methane and propane, and a chain transfer agent having an iodine atom is preferred. By polymerizing the specific monomer using the chain transfer agent having an iodine atom, a fluorinated polymer having an iodine atom at its terminal end can be produced.

The chain transfer agent having an iodine atom is preferably a compound represented by the formula (I).

(R^{f})-(X)₂ (I)

In the formula (I),
R^{f} is a C₁₋₁₆ fluoroalkylene group, or an aromatic group,
X is an iodine atom or a bromine atom, provided that at least one of the two is an iodine atom,
The fluoroalkylene group as R^{f} may be linear or branched. R^{f} is preferably a perfluoroalkylene group.

It is preferred that both X are iodine atoms.

Specific examples of the compound represented by the formula (I) include 1,2-diiodoperfluoroethane, 1,3-diiodoperfluoropropane, 1,4-diiodoperfluorobutane (hereinafter also referred to as "C4DI"), 1,5-diiodoperfluoropentane, 1,6-diiodoperfluorohexane, 1,8-diiodoperfluorooctane, 1,3-diiodo-2-chloroperfluoropropane, 1,5-diiodo-2,4-dichloroperfluoropentane, 1,12-diiodoperfluorododecane, 1,16-diiodoperfluorohexadecane, diiodomethane, 1,2-diiodoethane, 1,3-diiodo-n-propane, 2-iodoethyl-substituted benzene, 1-iodo-4-bromoperfluorobutane, 1-iodo-6-bromoperfluorohexane, 1-iodo-8-bromoperfluorooctane, 1-bromo-2-iodoperfluoroethane, 1-bromo-3-iodoperfluoropropane, 2-bromo-3-iodoperfluorobutane, 3-bromo-4-iodoperfluorobutene-1, 2-bromo-4-iodoperfluorobutene-1, monoiodomonobromo-substituted benzene and diiodomonobromo-substituted benzene.

The compound represented by the formula (I) is preferably C4DI.

The amount of the chain transfer agent used, per 100 parts by mass of the specific monomers used, is preferably 0.1 to 10 parts by mass, more preferably 0.1 to 5 parts by mass, further preferably 0.1 to 1 parts by mass.

In view of more excellent crosslinkability of the solid composition obtained, in the present production method, it is preferred that the specific monomers contain at least one monomer selected from the group consisting of BO, R_{Hal} and R_{CN}, or the first aqueous dispersion contains the chain transfer agent containing an iodine atom.

### (Means)

Step 1 is a step of polymerizing the specific monomers in the first aqueous dispersion to obtain the second aqueous dispersion containing the second fluorinated polymer.

The specific monomers are charged into a reaction system (that is a polymerization reactor) by a conventional method. For example, the specific monomers may be charged into the reaction system continuously or intermittently so as to keep a predetermined polymerization pressure. Otherwise, the specific monomers may be dissolved in the aqueous medium and the obtained solution is continuously or intermittently charged into the reaction system.

In a case where the polymerization initiator is used, the polymerization initiator may be added to the reaction system all at once or in divided portions. Further, in a case where other component (for example the chain transfer agent) is used, the other component may be added to the reaction system all at once or in divided portions.

The polymerization temperature is preferably 10 to 95°C, more preferably 15 to 90°C.

The polymerization pressure is preferably 0.5 to 4.0 MPaG, more preferably 0.6 to 3.5 MPaG.

The polymerization time is preferably 90 to 1000 minutes, more preferably 90 to 700 minutes in the case of batch treatment.

The polymerization of the specific monomers is conducted preferably substantially in the absence of an emulsifier.

The emulsifier may be the above-described emulsifier.

"Substantially in the absence of an emulsifier" means an environment in which the content of the emulsifier is 0.03 mass ppm or less to the total mass of the aqueous medium contained in the first aqueous dispersion, and the content is preferably 0.02 mass ppm or less, more preferably 0 mass ppm.

### (Second fluorinated polymer)

By step 1 of the present production method, the second fluorinated polymer is produced. The second fluorinated polymer contains units based on the specific monomers.

In the second fluorinated polymer, the content of the TFE units to the total content of the TFE units and the PAVE units, is 5 to 85 mol%, preferably 40 to 80 mol%, and with a view to more efficiently producing the second fluorinated polymer, it is more preferably 50 to 75 mol%, further preferably 60 to 70 mol%.

In the second fluorinated polymer, the content of the PAVE units to the total content of the TFE units and the PAVE units, is 15 to 95 mol%, preferably 20 to 60 mol%, and with a view to more efficiently producing the second fluorinated polymer, more preferably 25 to 50 mol%, further preferably 30 to 40 mol%. The suitable amount is the same also when the PMVE units of the PPVE units are used as the PAVE units.

In the second fluorinated polymer, the total content of the TFE units and the PAVE units to all units of the second fluorinated polymer, is preferably 80 to 100 mol%, more preferably 90 to 100 mol%, further preferably 95 to 100 mol%.

The second fluorinated polymer contains the TFE units and the PAVE units, and preferably further contains units based on other monomer. The units based on other monomer may be the units based on the other monomer in the above-described specific monomers.

In the second fluorinated polymer, the content of the TFE units to all units is preferably 35 to 80 mol%, more preferably 47 to 75 mol%, further preferably 59 to 70 mol%.

In the second fluorinated polymer, the content of the PAVE units to all units is preferably 20 to 60 mol%, more preferably 25 to 50 mol%, further preferably 30 to 40 mol%.

In the second fluorinated polymer, the content of the units based on the other monomer to all units is preferably 0.01 to 5 mol%, more preferably 0.05 to 3 mol%, further preferably 0.10 to 1 mol%.

In view of more excellent crosslinkability of the solid composition, the second fluorinated polymer preferably contains at least one member selected from the group consisting of a polymerizable unsaturated bond, a chlorine atom, a bromine atom, an iodine atom and a nitrile group, more preferably contains at least one member selected from the group consisting of a polymerizable unsaturated bond, an iodine atom and a nitrile group.

In particular, the second fluorinated polymer preferably contains at least one of the above members on at least one of the terminal end groups and side chains.

By step 1, the second fluorinated polymer is formed, and the second aqueous dispersion that has the particles containing the second fluorinated polymer dispersed in the aqueous medium is obtained.

### (Second aqueous dispersion)

The second aqueous dispersion is an aqueous dispersion containing the second fluorinated polymer obtained by step 1. In other words, the second aqueous dispersion is an aqueous dispersion that has particles containing the fluorinated polymer (hereinafter also referred to as "specific particles") dispersed in the aqueous medium, and the fluorinated polymer contains the second fluorinated polymer.

The specific particles may or may not contain the first fluorinated polymer.

The second aqueous dispersion may contain the first fluorinated polymer dispersed in the form of particles.

### · Specific particles

The preferred embodiment of the fluorinated polymer contained in the specific particles is the same as the second fluorinated polymer.

In view of dispersion stability of the specific particles, the content of the specific particles in the second aqueous dispersion to the total mass of the second aqueous dispersion is preferably 1 to 50 mass%, more preferably 10 to 40 mass%, further preferably 15 to 30 mass%.

The content (solid concentration) of the specific particles in the second aqueous dispersion may be measured, for example, as follows.

2.0 g of the second aqueous dispersion is heated at 170°C for 20 minutes, the mass of the residue is weighed, and the solid concentration is calculated in accordance with the following formula. 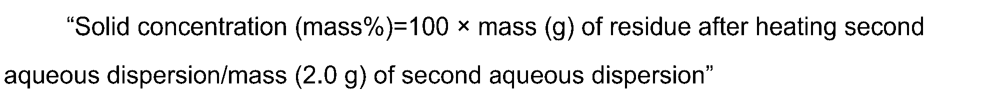 "Solid concentration (mass%)=100 × mass (g) of residue after heating second aqueous dispersion/mass (2.0 g) of second aqueous dispersion"

The average particle size of the specific particles is preferably 1 µm or less, and in view of dispersion stability of the specific particles, more preferably 500 nm or less, further preferably 400 nm or less.

The average particle size of the specific particles is, in view of the recovery efficiency in step 2 to be described below, preferably 50 nm or more, more preferably 60 nm or more, further preferably 80 nm or more.

The average particle size of the specific particles is a particle size calculated by analyzing the autocorrelation function, which is obtained by dynamic light scattering measurements, using the cumulant method under the assumption of a monodisperse particle distribution.

### · Aqueous medium

Specific examples of the aqueous medium contained in the second aqueous dispersion are the same as the specific examples of the aqueous medium contained in the above first aqueous dispersion.

The content of the aqueous medium to the total mass of the second aqueous dispersion is, in view of dispersion stability of the specific particles, preferably 50 to 99 mass%, more preferably 60 to 99 mass%, further preferably 70 to 99 mass%.

### · Emulsifier

In view of more excellent effect of the present invention, the content of the emulsifier in the second aqueous dispersion, to the total mass of the second aqueous dispersion, is preferably 100 mass ppm or less, more preferably 75 mass ppm or less, further preferably 50 mass ppm or less, still more preferably 1 mass ppm or less, particularly preferably 25 mass ppb or less. The content is also preferably the quantitative determination limit or less of the measurement method in EXAMPLES. The lower limit may be 1 mass ppb. It is preferred not to use an emulsifier for the second aqueous dispersion.

The content of the emulsifier may be measured by the same method as for the above first aqueous dispersion.

Specific examples of the emulsifier are as described above. The emulsifier in the second aqueous dispersion may or may not be water-soluble.

### <Step 2>

In step 2 of the present production method, the second aqueous dispersion obtained in step 1 is subjected to a stirring treatment to recover solid thereby to obtain a solid composition.

### (Stirring treatment)

As a specific stirring treatment method, for example, a method of using a stirring apparatus configured to rotate a stirring shaft provided with an agitating impeller may be mentioned.

The shape of the agitating impeller may, for example, be a paddle impeller, an inclined paddle impeller, a propeller impeller, a disc impeller, a three-bladed swept-back impeller, an anchor impeller, a turbine impeller or a disc turbine impeller, and in view of excellent stirring efficiency, a paddle impeller or a disc turbine impeller is preferred.

The number of the agitating impeller is preferably 1 to 10, more preferably 2 to 4.

Specific examples of the shape of a vessel used in the above stirring treatment include a cylindrical shape, a conical shape, an elliptic cylindrical shape, a rectangular cylindrical shape, and a pyramidal shape, and in view of mixing property and flowability, a cylindrical shape is preferred.

The stirring apparatus may have a baffle plate.

The stirring time is preferably 0.1 to 24 hours, more preferably 0.1 to 12 hours, further preferably 0.1 to 6 hours.

The circumferential speed during stirring is preferably 2 to 50 m/s, more preferably 3 to 30 m/s, further preferably 5 to 30 m/s. The circumferential speed may be constant during stirring or may change during stirring. The circumferential speed is also preferably higher than the circumferential speed in step 1. The circumferential speed during stirring represents the blade tip speed of the impeller.

The temperature of the aqueous dispersion during the stirring treatment is preferably 10 to 90°C, more preferably 10 to 80°C, further preferably 15 to 70°C.

### (Solid)

The solid is a solid obtained by the stirring treatment, and contains the fluorinated polymer.

In this specification, the solid refers to a solid that is not stably dispersed in the aqueous medium, and a dispersoid that is stably dispersed in the aqueous medium is not considered as a solid even if it is a solid insoluble in the aqueous medium. For example, among insoluble components (for example the specific particles) contained in the second aqueous dispersion after stirring, a dispersoid that is stably dispersed in the aqueous medium is not included in the solid, and a precipitate, a float, etc. are included in the solid. The solid may, for example, be an agglomerate of the specific particles.

The dispersoid stably dispersed may, for example, be a dispersoid which passes Type 5A filter paper as specified in JIS P 3801 (Filter paper for chemical analysis).

By recovering the solid, the solid composition of the present invention is obtained.

Examples of the method of recovering the solid include filtration and centrifugal separation, and filtration is preferred.

### <Washing>

The present production method preferably further has a step of washing the recovered solid composition (hereinafter also referred to as "step 3").

By step 3, components other than the fluorinated polymer contained in the solid composition (for example the emulsifier, the monomers, the polymerization initiator, and reaction products thereof) can be removed, and a crosslinked rubber article having desired physical properties is likely to be obtained.

The washing liquid in the washing step may be the above-described aqueous medium, and is preferably water, more preferably ultrapure water, with a very low content of impurities which may inhibit crosslinking.

Specific examples of the washing method include a method of dipping the solid composition in a washing liquid, followed by stirring, and a method of showering the solid composition with a washing liquid. The washing and dehydration of the solid composition may be repeated several times. Specific examples of the dehydration method include compression dewatering and centrifugal separation.

The amount of the washing liquid in the washing step is preferably 1 to 20 times, more preferably 1 to 10 times, further preferably 1 to 5 times, the total mass of the solid composition.

The temperature of the washing liquid in the washing step is preferably 5 to 80°C, more preferably 10 to 70°C, further preferably 20 to 60°C.

### [Solid composition]

By the present production method, the solid composition is obtained.

The solid composition of the present invention (hereinafter also referred to as "the present solid composition") contains a fluorinated polymer containing TFE unites and PAVE units, contains substantially no emulsifier, and satisfies requirement X to be described below.

In this specification, the solid composition means a composition having a solid content mass of 99 mass% or more. The solid content mass is calculated by the following method based on the mass before and after heating.

2.0 g of the solid composition is heated at 170°C for 20 minutes, the mass of the residue is weighed, and the solid content mass is calculated in accordance with the following formula. $Solid content mass \left(mass%\right) = 100 \times \left(mass of residue\right) / \left(mass of solid composition\right)$

### <Fluorinated polymer>

The fluorinated polymer contained in the present solid composition has the TFE units and the PAVE units.

Details of the TFE units and the PAVE units are the same as the TFE units and the PAVE units in the first fluorinated polymer, and the preferred embodiments are also the same.

The fluorinated polymer contained in the present solid composition preferably contains the second fluorinated polymer, and is preferably the second fluorinated polymer. That is, the preferred embodiment of the fluorinated polymer contained in the present solid composition is the same as the above-described second fluorinated polymer.

The present solid composition may or may not contain the first fluorinated polymer.

In this specification, in a case where only one type of the fluorinated polymer is contained, "all units of the fluorinated polymer" means all units of the one type of the fluorinated polymer. In a case where the specific particles contain two or more types of the fluorinated polymer, "all units of the fluorinated polymer" means all units of the two or more types of the fluorinated polymer.

The fluorinated polymer contained in the present solid composition may contain units based on monomer other than the TFE units and the PAVE units. For example, units based on the other monomer in the above-described specific monomers may be mentioned.

In view of more excellent crosslinkability, the fluorinated polymer contained in the present solid composition preferably contains at least one member selected from the group consisting of a polymerizable unsaturated bond, a chorine atom, a bromine atom, an iodine atom and a nitrile group, more preferably contains at least one member selected from the group consisting of a polymerizable unsaturated bond, an iodine atom and a nitrile group. In particular, the fluorinated polymer contains at least one of the above members preferably on at least one of the terminal end groups and side chains.

By using, as the specific monomers, the above other monomer in addition to TFE and PAVE, it is possible to introduce at least one of a polymerizable unsaturated bond, a chlorine atom, a bromine atom, an iodine atom and a nitrile group to the side chain or the terminal end group of the fluorinated polymer. Further, by polymerizing the specific monomers using a chain transfer agent containing an iodine atom, the iodine atom may be introduced to the terminal end group of the fluorinated polymer.

In a case where the fluorinated polymer contained in the specific particles contains an iodine atom, the content of the iodine atom to the total mass of the fluorinated polymer is preferably 0.01 to 5.00 mass%, more preferably 0.01 to 2.00 mass%, further preferably 0.01 to 1.00 mass%.

The content of the fluorinated polymer, to the total mass of the solid composition, is preferably 99.0 to 100 mass%, more preferably 99.5 to 100 mass%, further preferably 99.8 to 100 mass%.

### <Emulsifier>

The solid composition contains substantially no emulsifier.

"The solid composition contains substantially no emulsifier" means that no emulsifier is used in the solid composition production process and the solid composition contains no emulsifier, or if the solid composition contains the emulsifier, the total content of the emulsifier is 500 ppb or less to the total mass of the solid composition.

In a case where the solid composition contains the emulsifier, the total content of the emulsifier is, to the total mass of the solid composition, preferably 250 mass ppb or less, more preferably 100 mass ppb or less, further preferably 50 mass ppb or less. The content is also preferably the quantitative determination limit or less of the measurement method in EXAMPLES. The lower limit may be more than 0 mass ppb.

In the above, number of the type of the emulsifier contained in the solid composition is the number of the type of the emulsifier the content of which is more than the quantitative determination limit, and the emulsifier the content of which is the quantitative determination limit or less is not counted. Specifically, in measurement of the contents of emulsifier X, emulsifier Y and emulsifier Z in the solid composition, in a case where the contents of the emulsifier X and the emulsifier Y are more than the quantitative determination limit and the content of the emulsifier Z is the quantitative determination limit or less, the solid composition is considered to contain two types of the emulsifier X and the emulsifier Y.

The content of the emulsifier may be measured by the above method of measuring the content of the emulsifier in the method for producing the solid composition.

The emulsifier which the solid composition may contain is as defined above.

The solid composition preferably contains substantially none of compounds (emulsifiers) represented by the formulae (S1) to (S4). When no emulsifier is used at the time of production of the first fluorinated polymer contained in the first aqueous dispersion, generation of the compounds represented by the formulae (S1) to (S4) can be suppressed, and the contents of these compounds can readily be adjusted.

H-(CF₂)ₙ₁-COOM (S1)

F-(CF₂)ₙ₁-COOM (S2)

H-(CF₂)ₙ₂-SO₃M (S3)

F-(CF₂)ₙ₂-SO₃M (S4)

In the formulae (S1) to (S4),
n1 is an integer of 3 to 19,
n2 is an integer of 4 to 20, and
M is each independently a hydrogen atom, Na, K or NH₄.

In the solid composition of the present invention, the total content of the compounds represented by the formulae (S1) to (S4) to the total mass of the solid composition is preferably 25 mass ppb or less, more preferably 20 mass ppb or less. The content is also preferably the quantitative determination limit or less in the measurement method in EXAMPLES. The lower limit may be more than 0 mass ppb.

### <Requirement X>

The solid composition of the present invention satisfies requirement X. When requirement X is satisfied, the solid composition has a low content of components which impair the crosslinking, and excellent effect of the present invention will be achieved. Requirement X: a mixture obtained by mixing the solid composition and water having a pH of 6 so that the mass of the water is 5 times the mass of the solid composition, 24 hours after the mixing, has a pH of 4 or higher at 23°C.

The pH of the liquid mixture, 24 hours after the mixing, at 23°C, is 4 or higher, preferably 5 or higher. The pH is preferably 12 or lower, more preferably 10 or lower.

The pH of the liquid mixture is measured, after the solid composition and water are mixed and the mixture is left at rest at 23°C for 24 hours. The pH is measured by a known pH meter.

An example to obtain the solid composition which satisfies requirement X is a method of adjusting the stirring treatment conditions without using an agglomerating agent.

### <Agglomerating agent>

In the present production method, the aqueous dispersion is subjected to a stirring treatment to recover solid in the aqueous dispersion thereby to obtain the solid composition. Therefore, acid agglomeration, base agglomeration and agglomeration by a coagulant are not conducted. That is, the solid composition contains no residue of the agglomerating agent used in acid agglomeration, base agglomeration and agglomeration by a coagulant, and thus satisfies requirement X.

As the agglomerating agent, in the case of acid agglomeration, a method of adding a solution containing an acid may be employed, and as the acid to be added, hydrochloric acid, nitric acid, sulfuric acid, oxalic acid or hydrofluoric acid may be mentioned, and nitric acid may be mentioned.

In the case of base agglomeration, a method of adding a solution containing a base may be mentioned, and as the base, sodium hydroxide, potassium hydroxide, and ammonium carbonate may, for example, be mentioned.

In the case of agglomeration by a coagulant, a known coagulant is used, and as the coagulant, an aluminum salt, a calcium sat, a magnesium salt and an ammonium salt may be mentioned. Specifically, ammonium carbonate, aluminum sulfate, alum represented by the formula M'Al(SO₄)₂·12H₂O wherein M' is a monovalent cation other than lithium, calcium nitrate and magnesium sulfate may be mentioned.

The solid composition of the present invention contains substantially no agglomerating agent.

"The solid composition contains substantially no agglomerating agent" means that no agglomerating agent is used in the solid composition production process, and the solid composition contains no emulsifier, or in a case where the solid composition contains the agglomerating agent, the total content of the agglomerating agent is 25 mass ppb or less to the total mass of the solid composition.

In a case where the solid composition contains the agglomerating agent, the total content of the agglomerating agent is, to the total mass of the solid composition, preferably 25 mass ppb or less, more preferably 20 mass ppb or less. The lower limit may be more than 0 mass ppb.

### <Storage elastic modulus>

The storage elastic modulus G' of the solid composition at 100°C at 50 cpm is preferably 300 kPa or more, more preferably 350 kPa or more. In view of the moldability of the crosslinked rubber article, the storage elastic modulus G' is preferably 850 kPa or less, more preferably 800 kPa or less.

The storage elastic modulus G' at 100°C at 50 cpm is a value measured in accordance with ASTM D5289 and ASTM D6204, and the measurement conditions are described in detail in EXAMPLES.

An example of adjusting the storage elastic modulus may be a method of adjusting the amount of the monomers used, the order of use, etc.

The solid composition is also preferably a fluorinated elastomer.

The "fluorinated elastomer" is an elastic fluorinated polymer that has a storage elastic modulus G' at 100°C at 50 cpm, measured in accordance with ASTM D6204, of 80 or more and that has no melting point, and is distinguished from a fluororesin.

### <Metal content>

With a view to decreasing environmental contamination at the time of use, the total content of metals in the solid composition to the total mass of the solid composition is preferably 50 mass ppm or less, more preferably 20 mass ppm or less, further preferably 10 mass ppm or less. The content is also preferably the measurement limit or less in the measurement method in EXAMPLES. The lower limit may be 0.1 mass ppm.

The metal content is the total content of 29 metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb and Bi) measured by external calibration method using an inductively coupled plasma mass spectroscope.

The method of measuring the metal content of the solid composition may be a method of incinerating the solid composition and dissolving the obtained ash in an acid, and subjecting the solution to measurement by an inductively coupled plasma mass spectroscope, and the measurement conditions are described in detail in EXAMPLES.

For the solid composition produced by the present production method, it is not necessary to use an agglomerating agent containing a metal at the time of recovery, and thus the metal content can readily be adjusted to be within the above range.

### [Application]

The present production method is preferably applied to production of a crosslinked rubber article. That is, the solid composition obtained by the present production method is used preferably for production of a crosslinked rubber article.

Specific examples of the present crosslinked rubber article include sealing materials and cushioning materials such as rings, packings, oil seals, gaskets, diaphragms, and sheets. Further, examples also include sealing materials for semiconductor equipment, oil drilling members, wire sheath materials, heat-resistant chemical-resistant sealing materials, heat-resistant oil-resistant sealing materials, corrosion-resistant rubber paints, sealing materials for urea-resistant grease, rubber paints, adhesive rubber, hoses, tubes, calendered sheets (rolls), sponges, rubber rolls, heat dissipation sheets, solution-crosslinked materials, rubber sponges, bearing seals, linings, insulating sheets for vehicles, insulating sheets for electronic equipment, rubber bands, packings/valves, fenders, fibers and non-woven fabrics, sealing materials for substrates, rubber gloves, stators of single-screw eccentric pumps, parts for urea SCR systems, vibration isolators, damping materials, and sealants.

The cross sectional shapes of the rings, packings and seals are not particularly limited and may, for example, be O-shape, square or rectangle, or ferrule-shape, or may be irregular shape such as D-shape, X-shape, Y-shape, L-shape, T-shape, or V-shape.

Examples of fields in which the fluorinated rubber article is used include semiconductor-related fields, food and beverage production apparatus, pharmaceutical production apparatus, medical members, chemical transport equipment, nuclear power plant equipment, steel plate processing equipment, general industry, electricity, fuel cells, electric members, optical equipment components, space equipment components, petrochemical plant equipment, components for equipment used in the exploration and production of energy resources such as oil and gas, petroleum refining, components for petroleum transport equipment, automobile, aircraft, spacecraft and rockets, ships, chemical industry including chemical plants, pharmaceuticals and other chemical products, photographic equipment including developing machines, printing machines, coating equipment, analytical instruments, analytical and scientific instruments including measuring instruments, and food processing equipment for food plants and household use.

In the above-mentioned semiconductor-related fields, the rubber article can be used, for example, in semiconductor manufacturing equipment, liquid crystal panel manufacturing equipment, plasma panel manufacturing equipment, plasma display panel manufacturing equipment, plasma-addressed liquid crystal panel manufacturing equipment, organic electroluminescence (EL) panel manufacturing equipment, field emission display panel manufacturing equipment, solar cell substrate manufacturing equipment, semiconductor transfer equipment, and the like. More specifically, examples include chemical vapor deposition (CVD) apparatus; gas control systems such as semiconductor gas control units; dry etching apparatus; wet etching apparatus; plasma etching apparatus; reactive ion etching apparatus; reactive ion beam etching apparatus; sputter etching apparatus; ion beam etching apparatus; oxidation diffusion furnaces; sputtering apparatus; ashing apparatus; plasma ashing apparatus; cleaning apparatus; ion implantation apparatus; plasma CVD apparatus; exhaust systems; exposure apparatus; polishing apparatus; film-forming apparatus; dry etching cleaning apparatus; ultraviolet (UV)/ozone cleaning apparatus; ion beam cleaning apparatus; laser beam cleaning apparatus; plasma cleaning apparatus; gas etching cleaning apparatus; extraction cleaning apparatus; Soxhlet extraction cleaning apparatus; high-temperature, high-pressure extraction cleaning apparatus; microwave extraction cleaning apparatus; supercritical extraction cleaning apparatus; cleaning apparatus using hydrofluoric acid, hydrochloric acid, sulfuric acid, ozone water, or the like; steppers; coaters/developers; chemical mechanical polishing (CMP) apparatus; excimer laser exposure systems; chemical liquid piping; gas piping; plasma processing apparatus (for example, nitrogen trifluoride (NF₃) plasma processing, oxygen plasma processing, fluorine plasma processing, etc.); thermal treatment film-forming apparatus; wafer transfer equipment; wafer cleaning apparatus; silicon wafer cleaning apparatus; silicon wafer processing apparatus; low-pressure CVD (LPCVD) apparatus; lamp annealing apparatus; and reflow apparatus.

In the above-mentioned semiconductor-related fields, the composition can also be used, for example, in semiconductor manufacturing equipment, organic electroluminescence (EL) panel manufacturing equipment, field emission display panel manufacturing equipment, plasma-addressed liquid crystal panel manufacturing equipment, plasma display panel manufacturing equipment, liquid crystal panel manufacturing equipment, solar cell substrate manufacturing equipment, plasma panel manufacturing equipment, semiconductor transfer equipment, and the like. More specifically, examples include reactive ion beam etching apparatus; ion beam etching apparatus; sputter etching apparatus; plasma etching apparatus; reactive ion etching apparatus; dry etching apparatus; wet etching apparatus; chemical vapor deposition (CVD) apparatus; gas control systems such as semiconductor gas control units; oxidation diffusion furnaces; sputtering apparatus; plasma ashing apparatus; ashing apparatus; cleaning apparatus; ion implantation apparatus; plasma CVD apparatus; exhaust systems; exposure apparatus; polishing apparatus; film-forming apparatus; dry etching cleaning apparatus; ultraviolet (UV)/ozone cleaning apparatus; ion beam cleaning apparatus; laser beam cleaning apparatus; plasma cleaning apparatus; gas etching cleaning apparatus; extraction cleaning apparatus; Soxhlet extraction cleaning apparatus; high-temperature, high-pressure extraction cleaning apparatus; microwave extraction cleaning apparatus; supercritical extraction cleaning apparatus; cleaning apparatus using hydrofluoric acid, hydrochloric acid, sulfuric acid, ozone water, or the like; steppers; coaters/developers; chemical mechanical polishing (CMP) apparatus; excimer laser exposure systems; chemical liquid piping; gas piping; plasma processing apparatus (for example, nitrogen trifluoride (NF₃) plasma processing, oxygen plasma processing, fluorine plasma processing, etc.); thermal treatment film-forming apparatus; wafer transfer equipment; wafer cleaning apparatus; silicon wafer cleaning apparatus; silicon wafer processing apparatus; low-pressure CVD (LPCVD) apparatus; lamp annealing apparatus; and reflow apparatus.

As modes of use in the semiconductor-related field, examples include various sealing materials such as O-rings and gaskets for gate valves, quartz windows, chambers, chamber lids, gates, bell jars, couplings, and pumps; various sealing materials such as O-rings for resist developing solutions and stripping solutions; hoses and tubes; linings and coatings for resist developing solution tanks, stripping solution tanks, wafer cleaning solution tanks, and wet etching tanks; pump diaphragms; rolls for wafer transfer; hose tubes for wafer cleaning solutions; sealants for clean facilities such as clean rooms; sealing materials for storage containers of semiconductor manufacturing equipment and devices such as wafers; and diaphragms for chemical liquid transfer in semiconductor manufacturing processes.

As modes of use in the semiconductor-related field, examples include hose tubes for wafer cleaning solutions; linings and coatings for resist developing solution tanks, stripping solution tanks, wafer cleaning solution tanks, and wet etching tanks; pump diaphragms; rolls for wafer transfer; gate valves; quartz windows; chambers; chamber lids; gates; bell jars; couplings; various sealing materials such as O-rings and gaskets for pumps; various sealing materials such as O-rings for resist developing solutions and stripping solutions; hoses and tubes; sealants for clean facilities such as clean rooms; sealing materials for storage containers of semiconductor manufacturing equipment and devices such as wafers; and diaphragms for chemical liquid transfer in semiconductor manufacturing processes.

The crosslinked rubber article may be produced by crosslinking the solid composition of the present invention.

The crosslinking method may, for example, be a method of adding a crosslinking agent, followed by kneading or molding.

Specific examples of the crosslinking agent include an organic peroxide, a polyol, an amine and a triazine, and in view of excellent productivity, heat resistance and chemical resistance of the crosslinked rubber article, preferred is an organic peroxide.

Specific examples of the organic peroxide include a dialkyl peroxide, α,α'-bis(tert-butylperoxy)-p-diisopropylbenzene, α,α'-bis(tert-butylperoxy)-m-diisopropylbenzene, benzoyl peroxide, tert-butylperoxybenzene and 2,5-dimethyl-2,5-di(benzoylperoxy)hexane.

Specific examples of the dialkyl peroxide include 1,1-di(tert-butylperoxy)-3,3,5-trimethylcyclohexane, 2,5-dimethylhexane-2,5-dihydroxy peroxide, tert-butyl cumyl peroxide, dicumyl peroxide, 2,5-dimethyl-2,5-di-(tert-butylperoxy)hexane, 2.5-dimethyl-2.5-di(tert-butylperoxy)-3-hexyne, tert-butylperoxymaleic acid and tert-butylperoxyisopropyl carbonate.

For production of the crosslinked rubber article, a component other than the crosslinking agent may be used. The other component may, for example, be a catalyst, a crosslinking aid, an acid receptor, a filler, a reinforcing agent, a scorch retarder, a crown ether and a mold release agent.

The molding method may, for example, be injection molding, extrusion, coextrusion, blow molding, compression molding, blown film extrusion, transfer molding and calendering.

### EXAMPLES

Now, the present invention will be described in further detail with reference to Examples. Ex. 1 to 3 are Examples of the present invention, and Ex. 4 to 5 are Comparative Examples. However, it should be understood that the present invention is by no means restricted thereto.

The average particle size of particles in the aqueous dispersion was measured by using the aqueous dispersion in each Ex. as a sample, by means of a dynamic light scattering particle size measuring apparatus (ELSZ manufactured by Otsuka Electronics Co., Ltd.).

### [Production of solid composition]

### <Production of material dispersion A>

In a stainless steel pressure resistant reactor having an internal capacity of 2.2 L, equipped with an anchor impeller, ultrapure water (1130 g), a 30 mass% aqueous ammonia solution (30 mg), PMVE (72 g) and TFE (14 g) were charged and heated to 90°C with stirring at 600 rpm. Then, an aqueous ammonium persulfate solution (5.0 mass%, 30 cc) was added to initiate polymerization. Since the pressure in the reactor decreased as the polymerization started, TFE was added to keep a constant pressure. When the amount of TFE injected reached 4 g, the reactor was cooled to terminate the polymerization. The total amount of the monomers added before the start of the polymerization was 14 g of TFE and 72 g of PMVE. The total amount of the monomers added after the start of the polymerization was 4 g of TFE and 0 g of PMVE. The total amount of TFE added was 18 g, and the total amount of PMVE added was 72 g. Gas remaining in the reactor was recovered, and liquid was withdrawn. This liquid was taken as material dispersion A.

The material dispersion A was freeze-agglomerated and subjected to filtration, and the obtained fluorinated polymer 1A was analyzed by NMR and as a result, PAVE units/TFE units=34/66 (molar ratio).

### <Production of material dispersion B>

To 1000 g of HPR4002Cl (manufactured by DuPont, styrene gel-based strongly basic anion exchange resin), 2000 g of a 8 mass% aqueous sodium hydroxide solution was added, followed by stirring for 60 minutes, to replace chloride ions in the resin with hydroxide ions. The anion exchange resin had a total exchange capacity of 1.25 eq/L resin and an average size of 0.50 to 0.65 mm. The obtained anion exchange resin (200 g) was added to the material dispersion A, and stirring was started. 150 minutes after start of the stirring, the mixture was subjected to filtration to separate the material dispersion from the ion exchange resin. To the obtained filtrate, AmberLite (registered trademark) HPR650H (manufactured by DuPont, cation exchange resin, 50 g) was added. 60 minutes after the start of the stirring, the mixture was subjected to filtration to separate the material dispersion from the ion exchange resin to obtain material dispersion B. The material dispersion B had particles of fluorinated polymer 1A dispersed in the aqueous medium, and had a content of the fluorinated polymer 1A of 0.6 mass% to the total mass of the material dispersion B.

### <Ex. 1>

Into a stainless steel pressure resistant reactor having an internal capacity of 2.2 L, equipped with an anchor impeller, the material dispersion B (1000 g) and ultrapure water (175 g) were charged to obtain aqueous dispersion 1-1. The content of the fluorinated polymer 1A was 0.4 mass% to the total mass of the aqueous dispersion 1-1.

To the aqueous dispersion 1-1, perfluoro-1,4-diiodobutane (1.25 g), PMVE (90 g) and TFE (14 g) were charged and heated to 80°C with stirring at 600 rpm. TFE and PMVE were injected until the pressure in the reactor reached 1.5 MPa [gauge], and an aqueous ammonium persulfate solution (aqueous APS solution, 1.0 mass%, 20 mL, ammonium persulfate: 0.2 g) was added to initiate polymerization. Since the pressure in the reactor decreased as the polymerization started, TFE/PMVE in a molar ratio of 65/35 were injected to keep a constant pressure. When the amount of TFE injected reached 256 g and the amount of PMVE injected reached 217 g, the reactor was cooled to terminate the polymerization. The polymerization time was 380 minutes. The total amount of the monomers added before the start of the polymerization was 14 g of TFE and 90 g of PMVE. The total amount of the monomers added after the start of of the polymerization was 256 g of TFE and 217 g of PMVE. The total amount of TFE added was 270 g, and the total amount of PMVE added was 307 g.

The aqueous dispersion 1-1 contained substantially no water-soluble emulsifier. Specifically, the contents of emulsifier A to be described below and compounds represented by the formulae (S1) to (S4) were measured by the following method. In production of the aqueous dispersion 1-1, an emulsifier other than the emulsifier A and the compounds represented by the formulae (S1) to (S4) was not formed from the components used for production of the aqueous dispersion 1-1 nor used, and thus not contained in the aqueous dispersion 1-1.

The solid content of the aqueous dispersion 1-1 was measured, and the aqueous dispersion 1-1 in an amount corresponding to 0.05 g of the solid was weighed in a 100 mL screw-cap tube. Then, to the weighed aqueous dispersion 1-1, water and methanol were added so that 40 g of water/methanol=50/50 vol%. The mixture was well shaken until agglomeration. Solid was removed, and liquid phase was subjected to centrifugal separation at 4000 rpm for 1 hour, and supernatant was collected as an extract. The contents of the compounds represented by the formulae (S1) to (S4) were measured in the same manner as the measurement method in <Content of emulsifier> except for the sample preparation, and as a result, all the contents were the quantitative determination limit or less based on the aqueous dispersion 1-1.

Gas remaining in the reactor was recovered, and liquid was withdrawn. This liquid was taken as aqueous dispersion 2-1. The aqueous dispersion 2-1 was a dispersion that had particles (average particle size: 92.7 nm) containing fluorinated polymer dispersed in the aqueous medium and had a solid concentration of 20.5 mass%.

The aqueous dispersion 2-1 was put in a cylindrical vessel and stirred by an eight-blade disk turbine impeller in which eight blade plates were attached perpendicularly to an outer circumferential portion of a disk at equal angular intervals, at 5 m/s for 150 minutes, and solid was collected by filtration and recovered. The recovered solid was washed with 2000 g of ultrapure water at 40°C and dried to obtain rubber-like solid composition 1. The circumferential speed (m/s) during stirring represents the blade tip speed of the impeller.

Fluorinated polymer contained in the solid composition 1 obtained was analyzed by NMR and as a result, PAVE units/TFE units =34/66 (molar ratio).

### <Production of material dispersion C>

Fluorinated polymer 1C was produced by polymerization in the same manner as the production of the material dispersion A except that the amounts of the respective components were properly changed, and the obtained liquid was taken as material dispersion C. The material dispersion C was freeze-agglomerated and subjected to filtration, and the obtained fluorinated polymer 1C was analyzed by NMR and as a result, PAVE units/TFE units=32/68 (molar ratio).

### <Production of material dispersion D>

Material dispersion D was produced in the same manner as for the material dispersion B except that the material dispersion C was used instead of the material dispersion A. The material dispersion D had particles of the fluorinated polymer 1C dispersed in the aqueous medium, and had a content of the fluorinated polymer 1C of 0.6 mass% to the total mass of the material dispersion D.

### <Ex. 2>

Into a stainless steel pressure resistant reactor having an internal capacity of 2.2 L, equipped with an anchor impeller, the material dispersion D (1000 g) and ultrapure water (175 g) were charged to obtain aqueous dispersion 1-2. The content of the fluorinated polymer 1C was 0.4 mass% to the total mass of the aqueous dispersion 1-2. The aqueous dispersion 1-2 contained substantially no water-soluble emulsifier. The content of the emulsifier was confirmed by the same method as in the aqueous dispersion 1-1.

To the aqueous dispersion 1-2, PMVE (72 g), perfluoro-1,4-diiodobutane (2.0 g) and TFE (14 g) were charged and heated to 80°C with stirring at 600 rpm. TFE and PMVE were injected until the pressure in the reactor reached 1.5 MPa [gauge], and an aqueous APS solution (0.5 mass%, 16 mL, ammonium persulfate: 0.08 g) was added to initiate polymerization. Since the pressure in the reactor decreased as the polymerization started, TFE/PMVE in a molar ratio of 65/35 were injected to keep a constant pressure. When the amount of TFE added reached 256 g and the amount of PMVE added reached 217 g, the reactor was cooled to terminate the polymerization. The polymerization time was 290 minutes. The total amount of the monomers added before the start of the polymerization was 14 g of TFE and 72 g of PMVE. The total amount of the monomers added after the start of the polymerization was 256 g of TFE and 217 g of PMVE. The total amount of TFE added was 270 g, and the total amount of PMVE added was 289 g.

Gas remaining in the reactor was recovered, and liquid was withdraw. This liquid was taken as aqueous dispersion 2-2. The aqueous dispersion 2-2 was a dispersion that had particles (average particle size: 140.3 nm) containing the fluorinated polymer dispersed in the aqueous medium and had a solid concentration of 28.6 mass%.

The aqueous dispersion 2-2 was stirred by a paddle impeller at 10 m/s for 150 minutes, and solid was collected by filtration and recovered. The recovered solid was washed with 2000 g of ultrapure water at 40°C and dried to obtain rubber-like solid composition 2.

Fluorinated polymer 2 contained in the solid composition 2 obtained was analyzed by NMR and as a result, PAVE units/TFE units=35/65 (mola ratio).

### <Ex. 3>

Into a stainless steel pressure resistant reactor having an internal capacity of 2.2 L, equipped with an anchor impeller, the material dispersion D (1000 g) and ultrapure water (175 g) were charged to obtain aqueous dispersion 1-3. The content of the fluorinated polymer 1C was 0.4 mass% to the total mass of the aqueous dispersion 1-3. The aqueous dispersion 1-3 contained substantially no water-soluble emulsifier. The content of the emulsifier was confirmed by the same method as in the aqueous dispersion 1-1.

To the aqueous dispersion 1-3, PMVE (72 g) and TFE (14 g) were charged and heated to 80°C with stirring at 600 rpm. TFE and PMVE were injected until the pressure in the reactor reached 1.5 MPa [Gauge], and an aqueous APS solution (0.5 mass%, 16 mL, ammonium persulfate: 0.08 g) was added to initiate polymerization. Since the pressure in the reactor decreased as the polymerization started, TFE/PMVE in a molar ratio of 65/35 were injected to keep a constant pressure. When the amount of TFE added reached 6 g, perfluoro-1,4-diiodobutane (2.0 g) was injected. When the amount of TFE added reached 256 g and the amount of PMVE added reached 217 g, the reactor was cooled to terminate the polymerization. The polymerization time was 290 minutes. The total amount of the monomers added before the start of the polymerization was 14 g of TFE and 72 g of PMVE. The total amount of the monomers added after the start of the polymerization was 256 g of TFE and 217 g of PMVE. The total amount of TFE added was 270 g, and the total amount of PMVE added was 289 g.

Gas remaining in the reactor was recovered, and liquid was withdrawn. This liquid was taken as aqueous dispersion 2-3. The aqueous dispersion 2-3 was a dispersion that had particles (average particle size: 96 nm) containing fluorinated polymer dispersed in the aqueous medium and had a solid concentration of 27.6 mass%.

The aqueous dispersion 2-3 was stirred by a six-bladed turbine impeller at 30 m/s for 150 minutes, and solid was collected by filtration and recovered. The recovered solid was washed with 2000 g of ultrapure water at 25°C and dried to obtain rubber-like solid composition 3.

Fluorinated polymer contained in the solid composition 3 obtained was analyzed by NMR and as a result, PAVE units/TFE units = 34/65 (molar ratio).

### <Ex. 4>

A stainless steel pressure resistant reactor having an internal capacity of 2.2 L, equipped with an anchor impeller, was deaerated, and ultrapure water (1004 g), a 30 mass% C₂F₅OCF₂CF₂OCF₂COONH₄ (emulsifier A) solution (80.1 g) as the emulsifier, and a 5 mass% aqueous disodium hydrogen phosphate dodecahydrate solution (10.49 g) were charged and gas phase was replaced with nitrogen. While stirring by an anchor impeller at 600 rpm, PMVE (72 g) and TFE (14 g) were injected into the reactor and the internal temperature was increased to 80°C. Then, an aqueous APS solution (1.0 mass%, 20 mL) was added to initiate polymerization. Since the pressure in the reactor decreased as the polymerization started, TFE/PMVE in a molar ratio of 65/35 were injected to keep a constant pressure of 1.2 MPa [gauge]. When the amount of TFE added reached 160 g and the amount of PMVE added reached 133 g, the reactor was cooled to terminate the polymerization. The polymerization time was 262 minutes.

Gas remaining in the container was recovered, and liquid was withdrawn. This liquid was taken as aqueous dispersion 4. The aqueous dispersion 4 was a dispersion that had particles (average particle size: 84 nm) containing fluorinated polymer dispersed in the aqueous medium, and had a solid concentration of 21.1 mass%.

To the aqueous dispersion 4, an aqueous aluminum sulfate solution (5%, 2000 g) was added, and the agglomerate was collected by filtration and recovered. The recovered agglomerate was washed with 2000 g of ultrapure water at 40°C, and solid was collected by filtration and recovered. The recovered solid was dried to obtain rubber-like solid composition 4.

Fluorinated polymer contained in the solid composition 4 obtained was analyzed by NMR and as a result, PAVE units/TFE units =35/65 (molar ratio).

### <Ex. 5>

A stainless steel pressure resistant reactor having an internal capacity of 2.2 L, equipped with an anchor impeller, was deaerated, and ultrapure water (1004 g), a 30 mass% C₂F₅OCF₂CF₂OCF₂COONH₄ (emulsifier A) solution (80.1 g) as the emulsifier, and a 5 mass% aqueous disodium hydrogen phosphate dodecahydrate solution (10.49 g) were charged, and gas phase was replaced with nitrogen. While stirring by an anchor impeller at 600 rpm, PMVE (72 g) and TFE (14 g) were injected to the reactor and the internal temperature was increased to 80°C. Then, an aqueous APS solution (1.0 mass%, 20 mL, ammonium persulfate: 0.1 g) was added to initiate polymerization. Since the pressure in the reactor decreased as the polymerization started, TFE/PMVE in a molar ratio of 65/35 were added to keep a constant pressure of 1.2 MPa [gauge]. When the amount of TFE added reached 160 g and the amount of PMVE added reached 133 g, the reactor was cooled to terminate the polymerization. The polymerization time was 280 minutes.

Gas remaining in the reactor was recovered, and liquid was withdrawn. This liquid was taken as aqueous dispersion 5. The aqueous dispersion 5 was a dispersion that had particles (average particle size: 98.6 nm) containing fluorinated polymer 1G dispersed in the aqueous medium and had a solid concentration of 20.1 mass%.

The aqueous dispersion 5 was added to an aqueous nitric acid solution (3 mass%, 2500 g) and stirred, and solid was collected by filtration and recovered. The recovered solid was washed with 2000 g of ultrapure water at 60°C and dried to obtain rubber-like solid composition 5.

Fluorinated polymer contained in the solid composition 5 obtained was analyzed by NMR and as a result, PAVE units/TFE units = 35/65 (molar ratio).

### [Measurement and evaluation methods]

Various measurement methods and evaluation methos are as follows.

### <Requirement X>

The solid composition obtained in each Ex. was weighed in an amount as indicated in the following Table 1, and mixed with water having a pH of 6 at 23°C in an amount as indicated in Table 1 (5 times the mass of the solid composition), and the pH of the mixture was measured at 23°C for 24 hours after mixing by a benchtop pH meter (manufactured by HORIBA, Ltd., LAQUA).

### <Crosslinking rates t₅₀ and t₉₀>

Using the solid composition obtained in each Ex., components for crosslinking rate evaluation composition as indicated in Table 1, were blended and kneaded by a two-roll mill at 23°C for 10 minutes. After kneading, the gap between the two rolls was adjusted to obtain a 3 mm-thick crosslinking rate evaluation sheet.

In the following Table 1, the respective components and abbreviation are as follows.
· CB: MT carbon N990, manufactured by Vanderbilt
· crosslinking aid: TAIC-WH60, manufactured by Mitsubishi Chemical Corporation, triallyl isocyanurate 60% silica diluted
· crosslinking agent: PERHEXA 25B, manufactured by NOF CORPORATION, 2,5-dimethyl-2,5-di(t-butylperoxy)hexane
· mold release agent: NONSOUL SN-1, manufactured by NOF CORPOATION, sodium stearate

**Table 1**

| Table 1 | Amount (parts by mass) |
|---|---|
| Solid composition | 100 |
| CB | 10 |
| Crosslinking aid | 5 |
| Crosslinking agent | 1 |
| Mold release agent | 1 |

The obtained sheet for crosslinking rate evaluation was cut into 10 g to obtain a cut sheet. The cut sheet was sandwiched from both sides of its main surface between two polyester films (ALFA Technologies PART#F0311-S, 130 mm × 130 mm × 24 µm) to obtain a measurement sample. Using a measurement device PREMIER RPA (manufactured by ALFA Technologies, die shape: D0380), the torque (dNm) exerted on the measurement sample was measured at 150°C for 12 minutes under the conditions of a frequency of 100 cpm and an angle of 3.00 deg. Assuming the minimum and maximum values of the measured torque curve as 0% and 100%, respectively, the processing time required for the torque to reach 50% was determined as the t₅₀ value, and the processing time required for the torque to reach 90% was determined as the t₉₀ value.

### <Content of emulsifier>

### (Preparation of measurement sample)

The solid composition obtained in each Ex. was freeze-ground by a freeze-grinding machine Freezer Mill 6775 (manufactured by SPEX) under the following conditions. When freeze-ground, the solid composition was preliminarily mixed with dibutylhydroxytoluene (BHT) in an amount corresponding to 10 mass% of the total mass of the solid content to obtain a ground powder. The freeze-grinding conditions were such that the solid composition: 3 g, BHT: 0.3 g, run time: 5 mins, rate: 15 cps, and cycle: 3.

5 mL of methanol was added to 0.25 g of the obtained ground powder, and the mixture was subjected to ultrasonic treatment at 50°C for 2 hours and then subjected to centrifugal separation (5000 rpm, 5 minutes) to precipitate the fluorinated polymer, and the resulting supernatant was taken as an extract. The obtained extract was subjected to LC/MS/MS measurement. With respect to the emulsifier having a fluorine atom and the hydrocarbon emulsifier in the extract, measurement was conducted using a liquid chromatograph mass spectrometer. The measurement equipment configuration and the LC-MS measurement conditions are shown in Table 1. Using aqueous solutions of the emulsifier having a fluorine atom and the hydrocarbon emulsifiers each having a known concentration, aqueous solutions each at 5 or more contents were prepared, and LC/MS analysis was conducted on the aqueous solutions at the respective contents. The relation between the content and the area at the corresponding content was plotted to draw an analytical curve. Using the obtained analytical curve, the areas of the LC/MS chromatogram of the emulsifier having a fluorine atom and the hydrocarbon emulsifiers in the extract were converted to the contents of the emulsifier having a fluorine atom and the hydrocarbon emulsifiers.

**Table 2**

| LC unit | | |
|---|---|---|
| Apparatus | CTO-40C manufactured by Shimadzu Corporation | |
| Column | Shim-pack Velox SP-C18 2.7 µm, 150 mm × 2.1 mm | |
| Mobile phase | A 20mM CH₃COONH₄/H₂O | |

| | B CH₃OH | |
|---|---|---|
| | 0→0.5 min | A:B=80:20→A:B=75:25 Linear gradient |
| | 0.5→3.5 min | A:B=75:25→A:B=70:30 Linear gradient |
| | 3.5→5.0 min | A:B=70:30→A:B=40:60 Linear gradient |
| | 5.0→9.5 min | A:B=40:60→A:B=20:80 Linear gradient |
| | 9.5→10.0 min | A:B=20:80→A:B=2:98 Linear gradient |
| | 10.0→20.0 min | A:B=2:98 |
| | 20.0→20.1 min | A:B=2.0:98.0→A:B=80:20 Linear gradient |
| | 20.1→25.0 min | A:B=80:20 |
| Flow rate | 0.25 mL/min | |
| Column temperature | 40°C | |
| Sample injection amount | 2 µL | |

| MS unit | | |
|---|---|---|
| Apparatus | LCMS-8060NX manufactured by Shimadzu Corporation | |
| Measurement mode | MRM (Multiple Reaction Monitoring) | |
| | ESI (Electrospray ionization) | |
| Ionization method | Negative mode | |

The MRM measurement parameters are properly selected depending upon the structures of the emulsifier having a fluorine atom and the hydrocarbon emulsifier to be measured. The MRM parameters may be literature values or may be calculated by an LC-MS apparatus. Determination of the MRM parameters by an LC-MS apparatus are specifically as follows. Using an LC/MS apparatus (manufactured by Shimadzu Corporation, LCMS-8060NX), product ion search is selected, the molecular weights of the emulsifier having a fluorine atom and the hydrocarbon emulsifier to be measured are input, and precursor ion selection, precursor adjustment, voltage optimization, and product m/z optimization are performed. The calculated MRM measurement parameters are used. As an example, the MRM measurement parameters of the compounds (S2) and (S4) which are emulsifiers having a fluorine atom are shown in Tables. In the formulae (S2) and (S4), MS is a hydrogen atom, a metal element, NR4 (R is a hydrogen atom or a C₁₋₁₀ organic group, and the four R may be the same or different), imidazolium which may have a substituent, pyridinium which may have a substituent, or phosphonium which may have a substituent.

F-(CF2)n1-COOMS (S2)

F-(CF2)n2-SO3MS (S4)

wherein n1 is an integer of 3 to 17, and n2 is an integer of 4 to 12.

**Table 3**

| Compound | Number of carbon atoms | n= | Precursor | Product |
|---|---|---|---|---|
| Perfluorobutanoic acid | 4 | 3 | 213 | 169 |
| Perfluoropentanoic acid | 5 | 4 | 263 | 219 |
| Perfluorohexanoic acid | 6 | 5 | 313 | 269 |
| Perfluoroheptanoic acid | 7 | 6 | 363 | 319 |
| Perfluorooctanoic acid | 8 | 7 | 413 | 369 |
| Perfluorononanoic acid | 9 | 8 | 463 | 419 |
| Perfluorodecanoic acid | 10 | 9 | 513 | 469 |
| Perfluoroundecanoic acid | 11 | 10 | 563 | 519 |
| Perfluorododecanoic acid | 12 | 11 | 613 | 569 |
| Perfluorotridecanoic acid | 13 | 12 | 663 | 619 |
| Perfluorotetradecanoic acid | 14 | 13 | 713 | 669 |
| Perfluorohexadecanoic acid | 16 | 15 | 813 | 769 |
| Perfluorooctadecanoic acid | 18 | 17 | 913 | 869 |

**Table 4**

| Compound | Number of carbon atoms | n= | Precursor | Product |
|---|---|---|---|---|
| Perfluorobutanesufononic acid | 4 | 4 | 299 | 99 |
| Perfluoropentanesulfonic acid | 5 | 5 | 349 | 99 |
| Perfluorohexanesulfonic acid | 6 | 6 | 399 | 99 |
| Perfluoropentanesulfonic acid | 7 | 7 | 449 | 99 |
| Perfluorooctanesulfonic acid | 8 | 8 | 499 | 99 |
| Perfluorononanesulfonic acid | 9 | 9 | 549 | 99 |
| Perfluorodecanesulfonic acid | 10 | 10 | 599 | 99 |
| Perfluorododecanesulfonic acid | 12 | 12 | 699 | 99 |

### (Quantitative determination of emulsifier having fluorine atom and hydrocarbon emulsifier contained in solid composition)

Specifically, first, methanol standard solutions of the emulsifier having a fluorine atom and the hydrocarbon emulsifiers, each having a known concentration of 1 to 180 ng/g, were prepared, each at 5 concentrations. From the respective sample concentrations and the integrated peak areas, by first-order approximation, a was obtained from the formula (A1-1). $A = a \times X$

A: peak area of emulsifier, X: concentration (ng/g) of emulsifier

The amount of the emulsifier contained in the extract was calculated from the formula (A1-2). a in the formula (A1-2) represents a obtained from the formula (A1-1). $XCm = ACm / a$
XCm: content (ng/g) of emulsifier in extract
ACm: peak area of emulsifier in extract
The quantitative determination limit in this measurement is 1 ng/g.

The content (ZCm) of the emulsifier in the solid composition to the total mass of the solid composition was obtained from the following formula (A1-3). $ZCm = XCm \times ρ 1 \times La / W 1$
ZCm: content of emulsifier contained in solid composition
ρ1: density of extraction solvent (methanol in each Ex.)
La: volume of extraction solvent (5 mL in each Ex.)
W1: mass of sample used for extraction (2.5 g of solid composition in each Ex.)

### <Method of quantitative determination of formula (S1) and formula (S3) contained in solid composition>

The solid composition obtained in each Ex. was freeze-ground by a freeze-grinding machine Freezer Mill 6775 (manufactured by SPEX) under the following conditions. When freeze-ground, the solid composition was preliminarily mixed with dibutylhydroxytoluene (BHT) in an amount corresponding to 10 mass% of the total mass of the solid composition to obtain a ground powder. The freeze-grinding conditions were such that the solid composition: 3 g, BHT: 0.3 g, run time: 5 mins, rate: 15 cps, and cycle: 3.

5 mL of methanol was added to 2.5 g of the obtained ground powder, and the mixture was subjected to ultrasonic treatment at 50°C for 2 hours and then subjected to centrifugal separation (5000 rpm, 5 minutes) to precipitate the fluorinated polymer, and the resulting supernatant was taken as an extract.

The obtained extract was subjected to LC/MS/MS measurement. With respect to the emulsifier having a fluorine atom in the extract, measurement was conducted using a liquid chromatograph mass spectrometer. The measurement equipment configuration and the LC/MS measurement conditions are as described above. Using aqueous solutions of the emulsifier having a fluorine atom having a known concentration, methanol solutions at 5 or more contents were prepared, and LC/MS analysis was conducted on the methanol solutions at the respective contents. The relation between the content and the area at the corresponding content was plotted to draw an analytical curve. Using the obtained analytical curve, the area of the LC/MS chromatogram of the emulsifier having a fluorine atom in the extract was converted to the content of the emulsifier having a fluorine atom.

With respect to the content of the compound represented by the formula (S1) contained in each extract, the contents of the compounds of the formula (S1) wherein n1=3 to 13 were obtained by conversion to a corresponding perfluorocarboxylic acid (formula (S2)) with the same number of carbon atoms. With respect to the content of the compound represented by the formula (S3) in each extract, the contents of the compounds of the formula (S3) wherein n2=4 to 10 were obtained by conversion to a corresponding perfluorosulfonic acid (formula (S4)) with the same number of carbon atoms. The MRM parameters of the formula (S1) and the formula (S3) are as shown in Tables 5 and 6.

Specifically, first, methanol standard solutions of a perfluorocarboxylic acid and a perfluorosulfonic acid, each having a known concentration of 1 to 180 ng/g, were prepared, each at 5 concentrations. From the respective sample concentrations and the integrated peak areas, by first-order approximation, a and a' were obtained from the formula (A2-1) and the formula (A2-1'). $A = a \times X$ A: peak area of perfluorocarboxylic acid, X: concentration (ng/g) of perfluorocarboxylic acid $A ′ = a ′ \times X ′$ A': peak area of perfluorosulfonic acid, X': concentration (ng/g) of perfluorosulfonic acid

**Table 5**

| Compound represented by formula (S1) (value of n1 in formula (S1)) | Number of carbon atoms | Precursor ion | Product ion |
|---|---|---|---|
| 3 | 4 | 195 | 131 |
| 4 | 5 | 245 | 181 |
| 5 | 6 | 295 | 231 |
| 6 | 7 | 345 | 281 |
| 7 | 8 | 395 | 331 |
| 8 | 9 | 445 | 381 |
| 9 | 10 | 495 | 431 |
| 10 | 11 | 545 | 481 |
| 11 | 12 | 595 | 531 |
| 12 | 13 | 645 | 581 |
| 13 | 14 | 695 | 631 |

**Table 6**

| Compound represented by formula (S3) (value of n2 in formula (S3)) | Number of carbon atoms | Precursor ion | Product ion |
|---|---|---|---|
| 4 | 4 | 281 | 99 |
| 5 | 5 | 331 | 99 |
| 6 | 6 | 381 | 99 |
| 7 | 7 | 431 | 99 |
| 8 | 8 | 481 | 99 |
| 9 | 9 | 531 | 99 |
| 10 | 10 | 581 | 99 |

Specifically, first, by the above liquid chromatography mass spectroscope, peak areas of the compounds represented by the formula (S1) and the formula (S3) contained in each extract were measured.

The contents of the compound represented by the formula (S1) and the compound represented by the formula (S3) were calculated respectively from the formula (A2-2) and the formula (A2-2'). a in the formula (A2-2) represents a obtained from the formula (A2-1), and a' in the formula (A2-2') represents a' obtained from the formula (A2-1'). $XCm = ACm / a$
XCm: content (ng/g) of compound represented by formula (S1) with number of carbon atoms (n+1) in extract
ACm: peak area of compound represented by formula (S1) with number of carbon atoms (n+1) in extract $XCm ′ = ACm ′ / a ′$
XCm': content (ng/g) of compound represented by formula (S3) with number of carbon atoms n in extract
ACm': peak area of compound represented by formula (S3) with number of carbon atoms n in extract
The quantitative determination limit in this measurement is 1 ng/g.

The content (ZCm) of the compound of the formula (S1) in the solid to the total mass of the solid was obtained from the following formula (A2-3). $ZCm = XCm \times ρ 1 \times La / W 1$
ZCm: content of compound represented by formula (S1) with number of carbon atoms (n+1) contained in solid
ρ1: density of extraction solvent (methanol in each Ex.)
La: volume of extraction solvent (5 mL in each Ex.)
W1: mass of sample used for extraction (2.5 g of solid in each Ex.)

The content (ZCm') of the compound of the formula (S3) in the solid to the total mass of the solid was obtained from the following formula (A2-4). $ZCm ′ = XCm ′ \times ρ 1 \times La / W 1$
ZCm': content of compound represented by formula (S3) with number of carbon atoms n contained in solid
ρ1: density of extraction solvent (methanol in each Ex.)
La: volume of extraction solvent (5 mL in each Ex.)
W1: mass of sample used for extraction (2.5 g of solid in each Ex.)

The emulsifier content in each of Ex. 1 to 5, refers to the total content of the emulsifier A and the compounds of the above formulae (S1) to (S4) to the total mass of the solid composition (in Ex. 1 to 3, no emulsifier A was used and the emulsifier content substantially refers to the total content of the compounds of the formulae (S1) to (S4)).

### <Metal content>

The solid composition obtained in each Ex. was put in a platinum crucible and incinerated by a high temperature electric furnace, followed by fuming treatment. The residue was then dissolved in dilute nitric acid, and the resulting solution was analyzed using an inductively coupled plasma mass spectrometer (ICP-MS 7500cs, manufactured by Agilent Technologies) by external calibration method to determine the contents of 29 metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb, and Bi). The total content was calculated as the sum of these elements.

In the following Table 7, the metal content refers to the total content of the 29 metal elements.

### <Storage elastic modulus G'>

As a measurement apparatus, a rubber processability analyzer "PREMIER RPA (manufactured by ALPHA TECHNOLOGIES, die shape: D0380)" was used.

The solid composition obtained in each Ex. was kneaded by a two-roll mill at room temperature (23°C) for 10 minutes to prepare a 3 mm-thick sheet. The sheet thickness was controlled by adjusting the gap of the two rolls.

The obtained sheet was cut so that the weight would be about 10 g to obtain a cut sheet. The cut sheet was sandwiched between two polyester films (ALFA Technologies PART#F0311-S, 130 mm × 130 mm × 24 µm) to obtain a measurement sample. The sample was placed on the die of the measurement apparatus. The die temperature was preliminarily set to 100°C.

The sample was held at 100°C at a frequency of 30 cpm at an amplitude angle of 0.2 deg for 2 minutes, and then the amplitude angle was set to 0.5 deg and the frequency was increased to 10 cpm, 20 cpm, and 50 cpm to measure the storage elastic modulus. The storage elastic modulus at a frequency of 50 cpm at 100°C was taken as the storage elastic modulus G' (unit: kPa) of the sample.

**Table 7**

| Table 7 | | | Ex. 1 | Ex. 2 | Ex. 3 | Ex. 4 | Ex. 5 |
|---|---|---|---|---|---|---|---|
| Agglomerating agent | | | - | - | - | metal salt | acid |
| Requirement X | Amount of solid composition | 9 | 280 | 280 | 280 | 280 | 280 |
| | Amount of water | 9 | 1400 | 1400 | 1400 | 1400 | 1400 |
| | pH of water | | 6 | 6 | 6 | 6 | 6 |
| | pH of mixture | | 4 | 5 | 4 | 4 | 2.5 |
| Measurement results | Vulcanization rate t₉₀ | min | 3.6 | 4.0 | 3.2 | 4.4 | 4.5 |
| | Vulcanization rate t₅₀ | min | 1.3 | 1.6 | 1.5 | 1.8 | 1.9 |
| | Metal content | mass ppm | <20 | <20 | <20 | 60 | <20 |
| | Content of emulsifier A | mass ppb | 0 | 0 | 0 | >250 | >250 |
| | Content of formula (S1) | mass ppb | 6 | 22 | 8 | 12 | 9 |
| | Content of formula (S2) | mass ppb | 0 | 0 | 0 | 0 | 0 |
| | Content of formula (S3) | mass ppb | 0 | 0 | 0 | 0 | 0 |
| | Content of formula (S4) | mass ppb | 0 | 0 | 0 | 0 | 0 |
| | G' | kPa | 501 | 473 | 384 | 450 | 390 |

It was found from the evaluation results in Ex. 1 to 3 that according to the production method of the present invention, it is possible to produce a solid composition excellent in the crosslinking rate, since it contains substantially no emulsifier and agglomerating agent that decreases the vulcanization rate.

Ex. 4 and 5 correspond to a production method in which polymerization was conducted using an aqueous solution containing an emulsifier and an agglomerating agent is used when the solid composition is obtained, and the obtained solid composition contained the emulsifier and the obtained solid composition was inferior in the crosslinking rate.

The entire disclosure of Japanese Patent Application No. 2023-222139 filed on December 28, 2023 including specification, claims and summary is incorporated herein by reference in its entirety.

## Claims

1. A method for producing a solid composition, which comprises polymerizing; in an aqueous dispersion that contains substantially no water-soluble emulsifier, that contains a first fluorinated polymer containing units based on tetrafluoroethylene and units based on a perfluoro(alkyl vinyl ether), and that contains an aqueous medium; monomers containing tetrafluoroethylene and a perfluoro(alkyl vinyl ether), subjecting the aqueous dispersion containing a second fluorinated polymer obtained to a stirring treatment, and recovering solid obtained after the stirring treatment to obtain a solid composition,
wherein
in the first fluorinated polymer, to the total content of the units based on the tetrafluoroethylene and the units based on the perfluoro(alkyl vinyl ether), the content of the units based on the perfluoro(alkyl vinyl ether) is 5 to 80 mol%;
in the second fluorinated polymer, to the total content of units based on the tetrafluoroethylene and units based on the perfluoro(alkyl vinyl ether), the content of the units based on the perfluoro(alkyl vinyl ether) is 15 to 95 mol%; and
before the start of the polymerization of the monomers, the content of the first fluorinated polymer is 0.01 to 4.0 mass% to the total mass of the aqueous dispersion.

2. The method for producing the solid composition according to Claim 1, wherein the storage elastic modulus of the solid composition at 100°C is 300 kPa or more.

3. The method for producing the solid composition according to Claim 1 or 2,
wherein the solid composition contains no emulsifier, or if the solid composition contains an emulsifier, the total content of the emulsifier is 500 ppb or less to the total mass of the solid composition.

4. The method for producing the solid composition according to Claim 1 or 2,
wherein the total content of metals in the solid composition is 20 mass ppm or less to the total mass of the solid composition.

5. The method for producing the solid composition according to Claim 1 or 2,
wherein in the second fluorinated polymer, the content of the units based on the tetrafluoroethylene is 35 to 80 mol% and the content of the units based on the perfluoro(alkyl vinyl ether) is 20 to 60 mol%, to all units.

6. The method for producing the solid composition according to Claim 1 or 2,
wherein the second fluorinated polymer contains at least one member selected from the group consisting of a polymerizable unsaturated bond, a chlorine atom, a bromine atom, an iodine atom and a nitrile group.

7. The method for producing the solid composition according to Claim 1 or 2, which has a step of washing the solid composition.

8. A solid composition comprising a fluorinated polymer having units based on tetrafluoroethylene and units based on a perfluoro(alkyl vinyl ether);
which contains substantially no emulsifier; and
which satisfies requirement X;
requirement X: a mixture obtained by mixing the solid composition and water having a pH of 6 so that the mass of the water is 5 times the mass of the solid composition, 24 hours after the mixing, has a pH of 4 or higher at 23°C.

9. The solid composition according to Claim 8, which contains substantially no agglomerating agent.

10. A crosslinked rubber article, which is obtained by crosslinking the solid composition as defined in Claim 8 or 9.
